# EUROPEAN PATENT APPLICATION

(11) **EP 4 600 096 A1**
(43) Date of publication of application: **13.08.2025**
(21) Application number: 23887480.4
(22) Date of filing: 28.06.2023
(51) Int. Cl.: B60R 22/48, B60R 22/12

(54) **SEAT BELT DEVICE, VEHICLE SEAT, VEHICLE, AND METHOD FOR ADJUSTING SEAT BELT DEVICE**

(30) Priority: 09.11.2022 CN 202211399612
(71) Applicant: Shenzhen Yinwang Intelligent Technologies Co., Ltd., Shenzhen, Guangdong 518129 (CN)
(72) Inventor: ZHOU, Yongjia, Shenzhen, Guangdong 518129 (CN); LU, Lin, Shenzhen, Guangdong 518129 (CN)
(74) Representative: MERH-IP Matias Erny Reichl Hoffmann Patentanwälte PartG mbB
(86) International application number: PCT/CN2023/103447
(87) International publication number: WO 2024/098784

(57) **Abstract**

A seat belt apparatus is provided, including a seat belt strap (1), a seat belt inserting board (2) that penetrates the seat belt strap (1), and a seat belt buckle (3) that is in snap fit with the seat belt inserting board (2). The seat belt strap (1) includes a seat belt body (11), and a pressure detection component (12) and a pressure adjustment component (13) that are disposed on the seat belt body. When the seat belt inserting board (2) is in snap fit with the seat belt buckle (3), the pressure detection component (12) is configured to detect a pressure value of the seat belt strap (1), and the pressure adjustment component (13) is configured to adjust the pressure value of the seat belt strap (1). In this way, the pressure value of the seat belt strap can be adaptively adjusted based on different body shape features, to reduce a sense of pressure on a body part when a driver or a passenger wears a seat belt, and improve comfort of the driver or the passenger wearing the seat belt, so as to reduce, to some extent, a probability that the driver or the passenger is unwilling to wear the seat belt. A vehicle seat, a vehicle, and an adjustment method for a seat belt apparatus are further provided.

## Description

This application claims priority to Chinese Patent Application No. 202211399612.3, filed with the China National Intellectual Property Administration on November 9, 2022, and entitled "SEAT BELT APPARATUS, VEHICLE SEAT, VEHICLE, AND ADJUSTMENT METHOD FOR SEAT BELT APPARATUS", which is incorporated herein by reference in its entirety.

### TECHNICAL FIELD

This application relates to the field of vehicle technologies, and in particular, to a seat belt apparatus, a vehicle seat, a vehicle, and an adjustment method for a seat belt apparatus.

### BACKGROUND

A seat belt is an active safety device on a transportation means, and is critical to safety protection of a driver or a passenger in a driving process of a motor vehicle. For example, the seat belt of the vehicle may constrain the passenger during a collision, to avoid a secondary collision of the passenger with a steering wheel, a dashboard, or the like, or avoid a problem of casualties occurring when the passenger rushes out of the vehicle during the collision.

At present, a seat belt equipped on a seat of the vehicle is usually of a three-point seat belt structure, and has an obliquely extended belt part. The belt part obliquely extends downward from a shoulder of one side of the passenger to a waist of the other side of the passenger. When the driver or the passenger takes a seat and wears a seat belt, the seat belt automatically tightens, which easily causes a sense of pressure on a protruding part like a shoulder, and causes discomfort or even pain in long time wearing, resulting in poor user experience.

### SUMMARY

This application provides a seat belt apparatus, a vehicle seat, a vehicle, and an adjustment method for a seat belt apparatus, to resolve a problem that when a user wears a seat belt, the user feels uncomfortable and has poor use experience because the seat belt causes a sense of pressure to a protruding part like a shoulder.

According to a first aspect, this application provides a seat belt apparatus, including a seat belt strap, a seat belt inserting board that penetrates the seat belt strap, and a seat belt buckle that is in snap fit with the seat belt inserting board. The seat belt strap includes a seat belt body, and a pressure detection component and a pressure adjustment component that are disposed on the seat belt body. In this way, when the seat belt inserting board is in snap fit with the seat belt buckle, the pressure detection component is configured to detect a pressure value of the seat belt strap, and the pressure adjustment component is configured to adjust the pressure value of the seat belt strap.

In this application, the pressure detection component and the pressure adjustment component are disposed on the seat belt strap. In this case, in a wearing process, the seat belt apparatus has a capability of identifying the pressure value of the seat belt strap, and can perform pressure adjustment on an area in which a pressure value is greater than a threshold of a human body, so that when the seat belt apparatus is worn, the pressure value of the seat belt strap may be adaptively adjusted based on different body shape features, to reduce a sense of pressure to a body part of a driver or a passenger wearing the seat belt, and improve comfort of the driver or the passenger wearing the seat belt. In this way, user experience is improved.

In a possible implementation of the first aspect, a plurality of pressure detection components and a plurality of pressure adjustment components are disposed on the seat belt strap by area. An area distribution rule of the plurality of pressure detection components and an area distribution rule of the plurality of pressure adjustment components are related to human body parts in contact with the seat belt apparatus being worn. A distribution density of the plurality of pressure detection components and a distribution density of the plurality of pressure adjustment components are positively correlated with sensitivity of the human body parts to pressure. In this possible implementation, the plurality of pressure detection components and the plurality of pressure adjustment components are disposed on the seat belt strap by area, and are related to the human body parts in contact with the seat belt strap, so that pressure information of different human body parts such as a shoulder and a waist can be obtained, and pressure adjustment may be performed based on a requirement, to resolve a current problem that the driver or the passenger is uncomfortable in wearing a seat belt (for example, the seat belt is tightened). For a difference between pressure thresholds that can be borne by different human body parts such as the shoulder and the waist, monitoring and adjustment may be performed by area. This implements differentiated adjustment and control of a pressure on the seat belt strap, and improves comfort in wearing the seat belt.

In a possible implementation of the first aspect, the pressure detection component is further configured to send the pressure value to a first controller. The pressure adjustment component is further configured to: receive an adjustment instruction from the first controller, and adjust the pressure value of the seat belt strap based on the adjustment instruction, where the adjustment instruction is determined by the first controller based on the received pressure value.

In this possible implementation, the pressure detection component and the pressure adjustment component separately communicate with the first controller, and the first controller indicates, based on the obtained pressure value, the pressure adjustment component to perform pressure adjustment. This improves precision of pressure adjustment.

In an example, the first controller is disposed in an in-vehicle infotainment system of a vehicle to which the seat belt apparatus belongs. In this example, the first controller reuses a controller disposed in the in-vehicle infotainment system, to adjust the pressure value of the seat belt strap.

In another example, the first controller is disposed in the seat belt inserting board.

Optionally, the first controller is electrically connected to both the pressure detection component and the pressure adjustment component. The first controller is configured to adjust the pressure value of the seat belt strap through the pressure adjustment component based on the pressure value received from the pressure detection component and a position of the pressure detection component. In this example, the first controller disposed in the seat belt inserting board can be electrically connected to the pressure detection component and the pressure adjustment component on the seat belt strap. This further improves control precision of pressure adjustment.

Optionally, the first controller is specifically configured to: determine, based on a position of the pressure detection component, a pressure threshold of a human body part in contact with the pressure detection component; and when it is determined that the received pressure value is greater than the pressure threshold of the human body part in contact with the pressure detection component, adjust a pressure value at the position of the pressure detection component on the seat belt strap by controlling the status of the pressure adjustment component. In this example, the pressure value of the seat belt strap is detected by area, and the pressure value of the seat belt strap is adjusted based on pressure thresholds of different body parts, to implement differentiated comfort adjustment, and reduce a phenomenon that a user is unwilling to wear the seat belt.

Optionally, the first controller is further configured to: when the seat belt inserting board is in snap fit with the seat belt buckle, send, to a second controller, the pressure value obtained from the pressure detection component and the status of the pressure adjustment component, where the second controller is disposed in an in-vehicle infotainment system of a vehicle to which the seat belt apparatus belongs. In this way, the first controller disposed in the seat belt inserting board may send the obtained pressure value and the status of the pressure adjustment component to the second controller in the in-vehicle infotainment system, so that the second controller can implement global control. This also lays a foundation for the user to subsequently adjust a strap pressure value or memorize a strap pressure value through the in-vehicle infotainment system.

Optionally, the first controller is further configured to: when the pressure value at the position of the pressure detection component on the seat belt strap is adjusted to an adjustment threshold of the pressure adjustment component, but the pressure value is still greater than the pressure threshold of the human body part in contact with the pressure detection component, send a guide adjustment request to the second controller, where the guide adjustment request is used to request to adjust a position at which the seat belt strap is connected to a guide plate adjustment apparatus. In this way, when an airbag pressure on the seat belt cannot meet a human body requirement, a request is sent to the second controller in the in-vehicle infotainment system, so that the second controller can adjust a position at which the seat belt strap is fastened to a guide plate adjustment apparatus. This can meet a requirement for comfortable wearing of the seat belt in a special scenario.

In a possible implementation of the first aspect, the first controller is further configured to: obtain a plurality of strap pressure values detected by the plurality of pressure detection components on the seat belt strap; and if the plurality of strap pressure values are greater than pressure thresholds of human body parts in contact with the corresponding pressure detection components, and a distribution rule of the plurality of strap pressure values is inconsistent with a pressure distribution rule of the seat belt apparatus being normally worn, determine that the seat belt apparatus is not correctly worn, and output alarm information.

In this possible implementation, the seat belt apparatus may further send the alarm information for a phenomenon that some drivers or passengers do not wear seat belt apparatuses correctly, for example, a scenario in which a vehicle owner only inserts the buckle, and the seat belt does not bypass a body, to remind the driver or passenger to correctly wear the seat belt. This can effectively reduce the phenomenon that the driver or the passenger does not wear the seat belt apparatus correctly.

In a possible implementation of the first aspect, the pressure detection component is disposed on a first surface of the seat belt body, and the first surface is a surface that is in contact with a user body when the seat belt apparatus is worn. The pressure adjustment component includes an inflation component disposed on a second surface of the seat belt body and an airbag disposed between the seat belt body and the pressure detection component. The seat belt body is further provided with an air hole that communicates the inflation component with the airbag, and the air hole is used by the inflation component to inflate and deflate the airbag.

In this application, the pressure detection component may be a pressure sensor, and the inflation component may be an air pump. A position relationship among the pressure sensor, the air pump, and the airbag is set, to lay a foundation for implementing differentiated comfort adjustment and control of the seat belt.

Optionally, a first line is disposed on the seat belt body, and the first line is configured to electrically connect the inflation component and a power supply component that is disposed in the seat belt inserting board. The inflation component and the power supply component are electrically connected to each other through the first line. In this way, when the seat belt apparatus is unfastened, the power supply component may charge the inflation component, so that the pressure value of the seat belt strap can be deflated.

Optionally, the seat belt strap further includes an airbag wrapping layer, the pressure detection component is disposed on the airbag wrapping layer, and the airbag is disposed between the seat belt body and the airbag wrapping layer.

When the first controller is disposed in the seat belt inserting board, a second line connecting the pressure detection component and the first controller is further disposed on the airbag wrapping layer. The pressure detection component is configured to transmit the detected pressure value to the first controller through the second line.

In this example, the airbag wrapping layer may wrap the airbag, and attach the airbag to the seat belt body, so that the inflation component can inflate and deflate the airbag through the air hole provided on the seat belt body. The second line disposed on the seat belt body can connect the plurality of pressure detection components, and pressure detection components disposed on the seat belt body and the first controller disposed in the seat belt inserting board, to transmit a pressure signal.

In a possible implementation of the first aspect, a first snap-fit part is disposed at an end part of the seat belt inserting board, an electrical connection component is disposed on the first snap-fit part, and the seat belt buckle includes a second snap-fit part matching the first snap-fit part.

When the first snap-fit part is in snap fit with the second snap-fit part, the electrical connection component is configured to electrically connect the seat belt inserting board and the seat belt buckle.

In this possible implementation, the second snap-fit part in the seat belt buckle may include an inner spring plate. When a metal tongue in the seat belt inserting board is in snap fit with the seat belt buckle, the inner spring plate is connected to the electrical connection component, so that the first controller may transmit the obtained pressure value and the status of the pressure adjustment component to the in-vehicle infotainment system through an electrical connection. A structure of the seat belt inserting board and the seat belt buckle in this technical solution can implement a function of detecting whether the seat belt apparatus is fastened or unfastened, can implement a function of transmitting an electrical signal, and can further implement a power supply function.

According to a second aspect, this application provides a vehicle seat, including the seat belt apparatus according to any one of the first aspect and the possible implementations.

In a possible implementation of the second aspect, the vehicle seat further includes a first fastening part. The first fastening part is located on a first side of a seat cushion of the vehicle seat, the first fastening part is configured to fasten a first end of the seat belt strap included in the seat belt apparatus, a second end of the seat belt strap is connected to the guide plate adjustment apparatus of a vehicle pillar, and the first side is a side close to the vehicle pillar.

In a possible implementation of the second aspect, the vehicle seat further includes a second fastening part. The second fastening part is located on a second side of the seat cushion of the vehicle seat, the second fastening part is configured to fasten the seat belt buckle of the seat belt apparatus, and the second side is a side away from the vehicle pillar.

In a possible implementation of this application, the first fastening part and/or the second fastening part that are/is configured to fasten the seat belt apparatus may be disposed on the vehicle seat or in the vehicle, and the seat belt apparatus is used in cooperation with the vehicle seat or the vehicle through a first fastening structure and/or the second fastening part. This improves flexibility of disposing the seat belt apparatus.

According to a third aspect, this application provides a vehicle, including the seat belt apparatus according to any one of the first aspect and the possible implementations.

In a possible implementation of the third aspect, the vehicle further includes a guide plate adjustment apparatus, a first fastening part, and a second fastening part. The guide plate adjustment apparatus is disposed at a first position of a vehicle pillar, the first fastening part is disposed at a second position of the vehicle pillar, the second fastening part is connected to a seat cushion, the first position is higher than a seat back, and the second position is lower than or flush with the seat cushion. The guide plate adjustment apparatus is configured to fasten a first end of the seat belt strap included in the seat belt apparatus, the first fastening part is configured to fasten a second end of the seat belt strap included in the seat belt apparatus, and the second fastening part is configured to fasten the seat belt buckle of the seat belt apparatus.

In this possible implementation, the guide plate adjustment apparatus, the first fastening part, and the second fastening part for fastening the seat belt strap are all fastened to the vehicle. In this way, the seat belt apparatus is not affected when a vehicle seat is adjusted. This improves independence of the seat belt strap.

Optionally, the vehicle further includes the second controller disposed in the in-vehicle infotainment system. The second controller is configured to: receive a pressure value detected by the pressure detection component and a status of the pressure adjustment component, and adjust a pressure value of the seat belt strap based on the pressure value and the status of the pressure adjustment component.

In this possible implementation, the second controller disposed in the in-vehicle infotainment system may adjust the pressure value of the seat belt strap through the pressure adjustment component based on the received pressure value and the status of the pressure adjustment component.

Optionally, the second controller is further configured to: when a first condition is met, adjust a position at which the seat belt strap is fastened to the guide plate adjustment apparatus.

In an example, the first condition is that a pressure value at a position of the pressure detection component on the seat belt strap is adjusted to the adjustment threshold of the pressure adjustment component, and the pressure value is greater than the pressure threshold of the human body part in contact with the pressure detection component. In this example, when the second controller directly communicates with the pressure detection component and the pressure adjustment component, if the second controller adjusts the pressure value of the seat belt strap a plurality of times based on the received pressure value and the status of the pressure adjustment component, but the pressure value of the seat belt strap still cannot meet a requirement, it may be determined that this case may be caused by an excessively high position at which the seat belt strap is fastened to the guide plate adjustment apparatus. In this case, the second controller may adjust the position at which the seat belt strap is fastened to the guide plate adjustment apparatus, to meet requirements of different scenarios.

In another example, the first condition is that a guide adjustment request is received, and the guide adjustment request is used to request to adjust the position at which the seat belt strap is connected to the guide plate adjustment apparatus. In this example, after the seat belt inserting board is in snap fit with the seat belt buckle, the second controller may communicate with the first controller disposed in the seat belt inserting board, so that when the guide adjustment request is received, the second controller may be triggered to adjust the position at which the seat belt strap is fastened to the guide plate adjustment apparatus, to meet requirements of different scenarios.

In a possible implementation of the third aspect, the in-vehicle infotainment system is further configured to display a pressure adjustment control in at least one area on the seat belt strap. The second controller is further configured to: when an operation on the pressure adjustment control detected, adjust a pressure value of the corresponding area on the seat belt strap. Optionally, the pressure adjustment control may include a pressure increase control and a pressure decrease control. The pressure increase control is used to increase the strap pressure value of the corresponding area, and the pressure decrease control is used to decrease the strap pressure value of the corresponding area. Therefore, in this application, the driver or the passenger may set a strap pressure status of each area on the in-vehicle infotainment system, to meet a differentiated requirement of the driver or the passenger.

Optionally, the in-vehicle infotainment system is further configured to display a pressure setting control for the seat belt strap. The second controller is further configured to: when an operation on the pressure setting control is detected, determine whether to memorize a current pressure status of the seat belt strap, and perform a corresponding operation. Optionally, the pressure setting control may include a memorize control and a cancel control. The memorize control is used to memorize a current strap pressure value of the area, and the cancel control is used to exit a current procedure. In this application, after setting the strap pressure status of each area in the in-vehicle infotainment system, the driver or the passenger may use a memory function of the in-vehicle infotainment system. In this way, a personalized requirement of the driver or the passenger can be improved, and use experience is improved.

According to a fourth aspect, this application provides an adjustment method for a seat belt apparatus. The method is applied to a controller in a vehicle. The controller is communicatively connected to the seat belt apparatus in any one of the first aspect and the possible implementations, and the method includes:
when the seat belt inserting board is in snap fit with the seat belt buckle, obtaining a pressure value detected by the pressure detection component and a status of the pressure adjustment component; and adjusting a pressure value of the seat belt strap through the pressure adjustment component based on the pressure value.

In a possible implementation of the fourth aspect, the adjusting a pressure value of the seat belt strap through the pressure adjustment component based on the pressure value includes:
determining, based on a position of the pressure detection component, a pressure threshold of a human body part in contact with the pressure detection component; and
when it is determined that the received pressure value is greater than the pressure threshold of the human body part in contact with the pressure detection component, adjusting a pressure value at the position of the pressure detection component on the seat belt strap by controlling the status of the pressure adjustment component.

In a first possible implementation of the fourth aspect, the method further includes:
obtaining a plurality of strap pressure values detected by the plurality of pressure detection components on the seat belt strap; and
if the plurality of strap pressure values are greater than pressure thresholds of human body parts in contact with the corresponding pressure detection components, and a distribution rule of the plurality of strap pressure values is inconsistent with a pressure distribution rule of the seat belt apparatus being normally worn, determining that the seat belt apparatus is not correctly worn, and outputting alarm information.

In a possible implementation of the fourth aspect, the controller is disposed in the seat belt inserting board, and the obtaining a pressure value detected by the pressure detection component and a status of the pressure adjustment component includes: receiving the pressure value from the pressure detection component and the status from the pressure adjustment component.

The method further includes: when the pressure value at the position of the pressure detection component on the seat belt strap is adjusted to an adjustment threshold of the pressure adjustment component, but the pressure value is still greater than the pressure threshold of the human body part in contact with the pressure detection component, sending a guide adjustment request to the second controller. The guide adjustment request is used to request to adjust a position at which the seat belt strap is connected to the guide plate adjustment apparatus, and the second controller is a controller disposed in the in-vehicle infotainment system of the vehicle.

In a possible implementation of the fourth aspect, the controller is disposed in the in-vehicle infotainment system of the vehicle, and the obtaining a pressure value detected by the pressure detection component and a status of the pressure adjustment component includes:
receiving the pressure value from the pressure detection component and the status from the pressure adjustment component; or
receiving the pressure value of the pressure detection component and the status of the pressure adjustment component from the first controller, where the first controller is a controller disposed in the seat belt inserting board.

Optionally, the method further includes: when a first condition is met, adjusting, based on the pressure value and the status of the pressure adjustment component, a position at which the seat belt strap is fastened to the guide plate adjustment apparatus.

In an example, the first condition is that the pressure value at the position of the pressure detection component on the seat belt strap is adjusted to the adjustment threshold of the pressure adjustment component, and the pressure value is greater than the pressure threshold of the human body part in contact with the pressure detection component.

In another example, the first condition is that the guide adjustment request is received, and the guide adjustment request is used to request to adjust the position at which the seat belt strap is connected to the guide plate adjustment apparatus.

In a possible implementation of the fourth aspect, the method further includes: when an operation on a pressure adjustment control is detected, adjusting a pressure value of a corresponding area on the seat belt strap, where the pressure adjustment control is displayed through the in-vehicle infotainment system of the vehicle.

In a possible implementation of the fourth aspect, the method further includes: when an operation on a pressure setting control is detected, determining whether to memorize a current pressure status of the seat belt strap, and performing a corresponding operation, where the pressure setting component is displayed through the in-vehicle infotainment system of the vehicle.

According to a fifth aspect, this application provides an adjustment apparatus of a seat belt apparatus. The apparatus is communicatively connected to the seat belt apparatus in any one of the first aspect and the possible implementations, and the apparatus includes:
an obtaining module, configured to: when the seat belt inserting board is in snap fit with the seat belt buckle, obtain a pressure value detected by the pressure detection component and a status of the pressure adjustment component; and
a processing module, configured to adjust a pressure value of the seat belt strap through the pressure adjustment component based on the pressure value.

In a possible implementation of the fifth aspect, the processing module is specifically configured to:
determine, based on a position of the pressure detection component, a pressure threshold of a human body part in contact with the pressure detection component; and
when it is determined that the received pressure value is greater than the pressure threshold of the human body part in contact with the pressure detection component, adjust a pressure value at the position of the pressure detection component on the seat belt strap by controlling the status of the pressure adjustment component.

In a possible implementation of the fifth aspect, the obtaining module is further configured to obtain a plurality of strap pressure values detected by a plurality of pressure detection components on the seat belt strap.

The processing module is further configured to: if the plurality of strap pressure values are greater than pressure thresholds of human body parts in contact with the corresponding pressure detection components, and a distribution rule of the plurality of strap pressure values is inconsistent with a pressure distribution rule of the seat belt apparatus being normally worn, determine that the seat belt apparatus is not correctly worn, and output alarm information.

In a possible implementation of the fifth aspect, the apparatus is disposed in the seat belt inserting board.

The obtaining module is specifically configured to receive the pressure value from the pressure detection component and the status from the pressure adjustment component through a receiving module.

The processing module is further configured to: when the pressure value at the position of the pressure detection component on the seat belt strap is adjusted to an adjustment threshold of the pressure adjustment component, but the pressure value is still greater than the pressure threshold of the human body part in contact with the pressure detection component, send a guide adjustment request to the second controller through a sending module. The guide adjustment request is used to request to adjust a position at which the seat belt strap is connected to the guide plate adjustment apparatus, and the second controller is a controller disposed in the in-vehicle infotainment system of the vehicle.

In a possible implementation of the fifth aspect, the apparatus is disposed in an in-vehicle infotainment system of a vehicle.

The obtaining module is specifically configured to: receive the pressure value from the pressure detection component and the status from the pressure adjustment component through a receiving module; or receive the pressure value of the pressure detection component and the status of the pressure adjustment component from the first controller, where the first controller is a controller disposed in the seat belt inserting board.

Optionally, the processing module is further configured to: when a first condition is met, adjust, based on the pressure value and the status of the pressure adjustment component, a position at which the seat belt strap is fastened to the guide plate adjustment apparatus.

In an example, the first condition is that the pressure value at the position of the pressure detection component on the seat belt strap is adjusted to an adjustment threshold of the pressure adjustment component, and the pressure value is greater than a pressure threshold of a human body part in contact with the pressure detection component.

In another example, the first condition is that the guide adjustment request is received, and the guide adjustment request is used to request to adjust the position at which the seat belt strap is connected to the guide plate adjustment apparatus.

In a possible implementation of the fifth aspect, the processing module is further configured to: when an operation on a pressure adjustment control is detected, adjust a pressure value of a corresponding area on the seat belt strap, where the pressure adjustment control is displayed through the in-vehicle infotainment system of the vehicle.

In a possible implementation of the fifth aspect, the processing module is further configured to: when an operation on a pressure setting control is detected, determine whether to memorize a current pressure status of the seat belt strap, and perform a corresponding operation, where the pressure setting component is displayed through the in-vehicle infotainment system of the vehicle.

According to a sixth aspect, this application provides a controller, including a memory and a processor. The memory is configured to store a computer program, and the processor is configured to execute the computer program to perform the method according to any one of the fourth aspect or the possible implementations of the fourth aspect.

According to a seventh aspect, this application provides a computer-readable storage medium. The computer-readable storage medium stores a computer program or instructions. When the computer program or the instructions are run on a computer, the computer is enabled to perform the method according to any one of the fourth aspect or the possible implementations of the fourth aspect.

According to an eighth aspect, this application provides a computer program product including a computer program. When the computer program is run on a computer, the computer is enabled to perform the method according to any one of the fourth aspect or the possible implementations of the fourth aspect.

According to a ninth aspect, this application further provides a chip or a chip system. The chip or the chip system includes at least one processor and a communication interface. The communication interface and the at least one processor are interconnected through a line. The at least one processor is configured to run a computer program or instructions, to perform the method according to any one of the fourth aspect or the possible implementations of the fourth aspect. The communication interface in the chip may be an input/output interface, a pin, a circuit, or the like.

In a possible implementation, the chip or the chip system described above in this application further includes at least one memory, and the at least one memory stores instructions. The memory may be a storage unit inside the chip, for example, a register or a buffer, or may be a storage unit (for example, a read-only memory or a random access memory) of the chip.

It should be understood that technical solutions in the fourth aspect to the ninth aspect of this application correspond to technical solutions in the first aspect to the third aspect of this application, and beneficial effect achieved by the aspects and corresponding feasible implementations are similar. Details are not described again.

This application provides the seat belt apparatus, the vehicle seat, a vehicle, and the adjustment method for a seat belt apparatus, and relates to the field of vehicle technologies. The seat belt apparatus includes the seat belt strap, the seat belt inserting board that penetrates the seat belt strap, and the seat belt buckle that is in snap fit with the seat belt inserting board. The seat belt strap includes the seat belt body, and the pressure detection component and the pressure adjustment component that are disposed on the seat belt body. In this way, when the seat belt inserting board is in snap fit with the seat belt buckle, the pressure detection component is configured to detect the pressure value of the seat belt strap, and the pressure adjustment component is configured to adjust the pressure value of the seat belt strap. In the technical solutions, to reduce a sense of pressure caused to the driver or the passenger in the process of wearing the seat belt apparatus, a structure of the seat belt is improved. For example, a pressure detection technology and a pressure adjustment technology are applied to the seat belt strap. In this case, in the wearing process, the seat belt apparatus has a capability of identifying the pressure value of the seat belt strap, and can perform pressure adjustment on an area in which a pressure value is greater than a threshold of a human body, so that the strap pressure value may be adaptively adjusted based on different body shape features, to reduce a sense of pressure to a body part of the driver or the passenger wearing the seat belt, and improve comfort of the driver or the passenger wearing the seat belt. In this way, a probability of unwillingness to wear the seat belt is reduced to some extent.

### BRIEF DESCRIPTION OF DRAWINGS

FIG. 1 is a diagram of a structure of a three-point seat belt;
FIG. 2 is a diagram of an entire process of using a seat belt;
FIG. 3 shows a seat belt strap to which a seat belt sheath is added;
FIG. 4 is a diagram of a structure of a seat belt apparatus according to an embodiment of this application;
FIG. 5 is a diagram of a side view of a seat belt strap in FIG. 4;
FIG. 6 is a diagram in which a seat belt apparatus is worn by a driver or a passenger;
FIG. 7 is a diagram of distribution of a pressure detection component and a pressure adjustment component on a seat belt strap;
FIG. 8 is a diagram of a signal flow direction when a seat belt apparatus is worn;
FIG. 9 is a diagram of a structure of a seat belt strap;
FIG. 10 is a diagram of a structure of a seat belt inserting board and a seat belt buckle;
FIG. 11 is a diagram of a structure of a vehicle seat according to an embodiment of this application;
FIG. 12 is a diagram of a structure of a vehicle pillar;
FIG. 13 is a diagram of a position of an in-vehicle infotainment system in a vehicle;
FIG. 14 is a schematic flowchart of an adjustment method for a seat belt apparatus according to an embodiment of this application; and
FIG. 15 is a diagram of a structure of an adjustment apparatus of a seat belt apparatus according to an embodiment of this application.

### DESCRIPTION OF EMBODIMENTS

In the embodiments of this application, "a plurality of" refers to two or more than two. The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects.

A vehicle seat belt is an indispensable safety apparatus in a vehicle, and is an important tool used to protect life safety of a driver or a passenger (a passenger and/or a driver). When the vehicle collides, the vehicle seat belt can reduce damage to the driver or the passenger by constraining an upper body of the driver or the passenger. Therefore, the driver or the passenger should use the seat belt according to regulations.

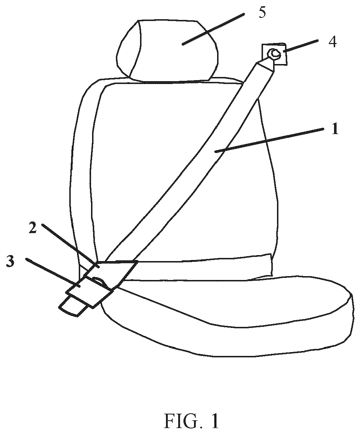

Currently, a standard form of the seat belt used in the vehicle is a three-point seat belt structure, which is specifically shown in FIG. 1. FIG. 1 is a diagram of a structure of a three-point seat belt. As shown in FIG. 1, the three-point seat belt includes a seat belt strap 1, a seat belt inserting board 2, and a seat belt buckle 3. The seat belt inserting board 2 is disposed on the seat belt strap 1. A first end of the seat belt strap 1 is fastened to a guide plate 4, and a second end of the seat belt strap 1 is fastened to a vehicle seat 5 or a fastening part (not shown in FIG. 1) of a vehicle. The guide plate 4 may be disposed on the vehicle seat 5, or may be disposed on a B-pillar of the vehicle. The fastening part and the guide plate 4 are located on a same side of the vehicle seat 5, and a position of the guide plate 4 is higher than a position of the fastening part. When the three-point seat belt is worn, the seat belt inserting board 2 is in snap fit with the seat belt buckle 3.

In actual application, the three-point seat belt further includes a retractor (not shown), and the retractor is hidden in the B-pillar of the vehicle.

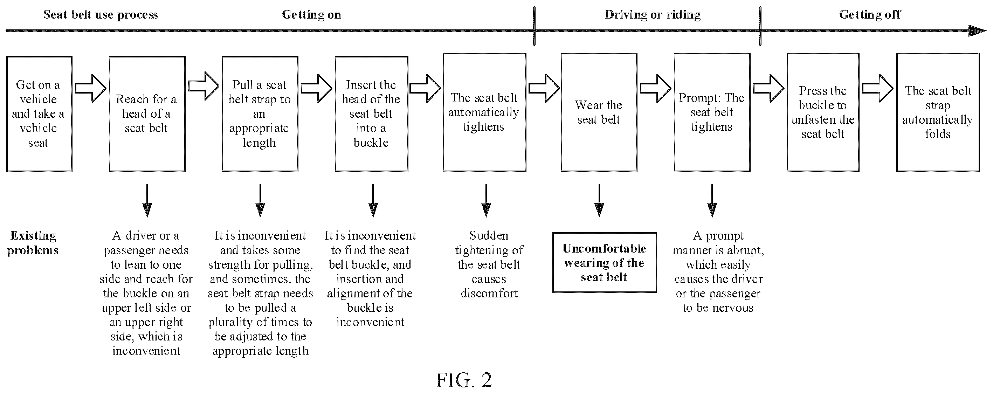

Optionally, FIG. 2 is a diagram of an entire process of using a seat belt. As shown in FIG. 2, the entire process of using the seat belt may include three phases: a getting on phase, a driving or riding phase (driving or riding), and a getting off phase.

In the getting on phase, after getting on a vehicle and taking a vehicle seat, a driver or a passenger reaches for a head of the seat belt (seat belt inserting board), then pull a seat belt strap to an appropriate length, and insert the head of the seat belt into a buckle (seat belt buckle). The seat belt automatically tightens after being released.

In the driving or riding phase, the driver or the passenger wears the seat belt, and when the seat belt tightens, a prompt that "the seat belt tightens" is provided.

In the getting off phase, when the driver or the passenger presses the buckle to unfasten the seat belt, the seat belt strap automatically folds.

However, there are a plurality of problems in the foregoing process of using the seat belt. For example, in the getting on phase, when the driver or the passenger reaches for the head of the seat belt, the driver or the passenger needs to lean to one side and reach for the buckle on an upper left side or an upper right side, which is inconvenient. It is inconvenient and takes some strength for the driver or the passenger to pull the seat belt strap to the appropriate length, and sometimes, the seat belt strap needs to be pulled a plurality of times to be adjusted to the appropriate length. When the head of the seat belt is inserted into the buckle, it is inconvenient for the driver or the passenger to find the buckle of the seat belt, and insertion and alignment of the buckle is inconvenient. During automatically tightening of the seat belt, sudden tightening of the seat belt causes discomfort. In addition, in the driving or riding phase, a problem of uncomfortable wearing of the seat belt exists in a process of wearing the seat belt, and a prompt manner during sudden tightening of the seat belt is abrupt, which easily causes the driver and passenger to be nervous.

Generally, uncomfortable wearing of the seat belt may include feedback from the driver or the passenger that the seat belt is too tight, it is more uncomfortable to wear the seat belt in winter, and the abdomen of a pregnant woman is constricted when the seat belt is worn, and problems such as a sense of pressure on a protruding part like a shoulder during wearing of the seat belt, and discomfort or even pain in long time wearing.

It can be learned from the foregoing analysis that, because the foregoing problems exist in the process of using the seat belt, most passengers and drivers are unwilling to wear seat belts.

However, in actual application, the seat belt is critical to driving safety. For example, when a frontal collision occurs on the vehicle, wearing the seat belt can reduce a mortality rate by 45%, and when the vehicle is overturned, wearing the seat belt can reduce a mortality rate by 75%. Therefore, on the basis of safety protection, how to improve comfort of the driver or the passenger needs to be further considered.

At present, the seat belt is prone to cause problems such as a sense of pressure, discomfort, or even pain in long time wearing on a protruding part like a shoulder of a driver or a passenger. Therefore, the driver or the passenger intends to add a device like a seat belt sheath or a clamp to assist in fastening the seat belt, to improve the sense of pressure during wearing of the seat belt.

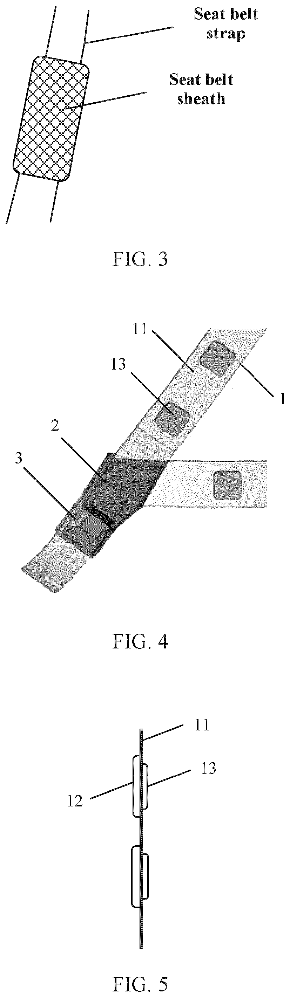

For example, FIG. 3 shows a seat belt strap to which a seat belt sheath is added. As shown in FIG. 3, the seat belt sheath is sleeved on the seat belt strap. A soft feature of the seat belt sheath can be used to improve a sense of pressure of a seat belt on a driver or a passenger to some extent, especially a sense of pressure on a protruding part. However, in this manner, a pressure magnitude is not improved from a design of the seat belt, and a problem of uncomfortable wearing still exists. In addition, because another device needs to be added for assistance, and is not integrated with the seat belt, user experience is poor.

An embodiment of this application provides a seat belt apparatus, including a seat belt strap, a seat belt inserting board that penetrates the seat belt strap, and a seat belt buckle that is in snap fit with the seat belt inserting board. The seat belt strap includes a seat belt body, and a pressure detection component and a pressure adjustment component that are disposed on the seat belt body. In this way, when the seat belt inserting board is in snap fit with the seat belt buckle, the pressure detection component may be configured to detect a pressure value of the seat belt strap, and the pressure adjustment component may be configured to adjust the pressure value of the seat belt strap. In this technical solution, a structure of a seat belt is improved, so that a sense of pressure caused to a driver or a passenger in a process of wearing the seat belt apparatus is reduced. For example, a pressure detection technology and a pressure adjustment technology are applied to the seat belt strap. In this case, in the wearing process, the seat belt apparatus has a capability of identifying the pressure value of the seat belt strap, and can perform pressure adjustment on an area in which a pressure value is greater than a threshold of a human body, so that when the seat belt apparatus is worn, the pressure value of the seat belt strap may be adaptively adjusted based on different body shape features, to reduce a sense of pressure to a body part of the driver or the passenger wearing the seat belt, and improve comfort of the driver or the passenger wearing the seat belt. In this way, a probability of unwillingness to wear the seat belt is reduced to some extent.

The following describes the technical solutions of this application in detail with reference to specific embodiments. It should be noted that the following several specific embodiments may be combined with each other, and a same or similar concept or process may not be described repeatedly in some embodiments.

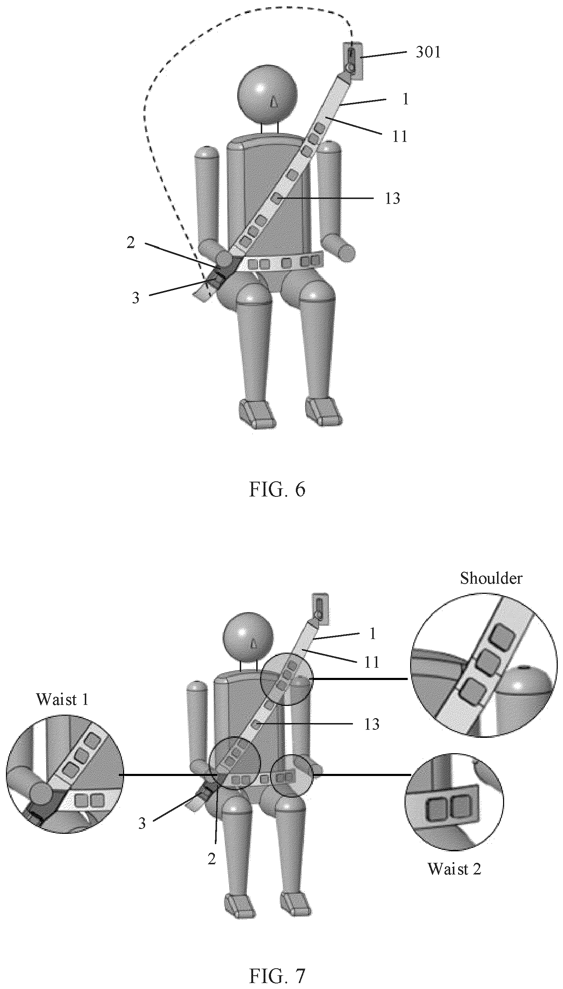

FIG. 4 is a diagram of a structure of a seat belt apparatus according to an embodiment of this application. FIG. 5 is a diagram of a side view of a seat belt strap in FIG. 4. FIG. 6 is a diagram in which a seat belt apparatus is worn by a driver or a passenger. As shown in FIG. 4 to FIG. 6, the seat belt apparatus includes: a seat belt strap 1, a seat belt inserting board 2 that penetrates the seat belt strap 1, and a seat belt buckle 3 that is in snap fit with the seat belt inserting board 2.

Refer to FIG. 4 and FIG. 5. The seat belt strap 1 includes a seat belt body 11, and a pressure detection component 12 and a pressure adjustment component 13 that are disposed on the seat belt body 11.

When the seat belt inserting board 2 is in snap fit with the seat belt buckle 3, the pressure detection component 12 is configured to detect a pressure value of the seat belt strap 1, and the pressure adjustment component 13 is configured to adjust the pressure value of the seat belt strap 1.

Refer to FIG. 6. When the seat belt apparatus is worn, the seat belt strap 1 is divided into an oblique extension part and a waist and abdomen constraint part by the seat belt inserting board 2. The oblique extension part located on one side of the seat belt inserting board 2 obliquely extends from a shoulder of one side (a left side in the example in FIG. 6) of a driver or a passenger to proximity to the seat belt inserting board 2 at a waist of the other side (a right side in the example in FIG. 6) of the driver or the passenger. The waist and abdomen restraint part located on the other side of the seat belt inserting board 2 extends from a waist on the one side (the seat belt inserting board 2) of the driver or the passenger to the waist on the other side of the driver or the passenger in a left-right direction. Optionally, a first end of the oblique extension part is fastened to a guide plate adjustment apparatus 301.

It may be understood that a material of the seat belt strap 1 may be a woven fabric or another material. This is not limited in this application.

In embodiments of this application, to resolve a sense of pressure caused by the seat belt strap 1 to a human body part when the driver or the passenger wears the seat belt apparatus, the pressure detection component 12 and the pressure adjustment component 13 may be separately disposed on the seat belt strap 1.

When the seat belt apparatus is worn, the pressure detection component 12 detects the pressure value of the seat belt strap 1, namely, a pressure value of the seat belt strap 1 for the human body part. When the pressure value of the seat belt strap 1 is greater than a pressure threshold of the human body part, the pressure adjustment component 13 adjusts the pressure value of the seat belt strap 1, to reduce the sense of pressure of the seat belt strap 1 on the human body part, and improve comfort of the driver or the passenger wearing the seat belt apparatus.

It may be understood that, conceptually, in addition to the seat belt strap 1, the seat belt inserting board 2, and the seat belt buckle 3, the seat belt apparatus may further include structural elements such as a retractor for retracting the seat belt strap 1. Details are not described herein.

Optionally, in an optional embodiment of this application, a plurality of pressure detection components 12 and a plurality of pressure adjustment components 13 are disposed on the seat belt strap 1 by area.

An area distribution rule of the plurality of pressure detection components 12 and an area distribution rule of the plurality of pressure adjustment components 13 are related to the human body parts in contact with the seat belt apparatus being worn. A distribution density of the plurality of pressure detection components 12 and a distribution density of the plurality of pressure adjustment components 13 are positively correlated with pressure sensitivity of the human body parts.

Optionally, in an example, the pressure detection component 12 and the pressure adjustment component 13 may be disposed in pairs, as shown in FIG. 5. In another example, the pressure detection component 12 and the pressure adjustment component 13 may alternatively be disposed in a non-paired manner. For example, at least two pressure adjustment components 13 are configured for one pressure detection component 12. This is not limited in embodiments of this application. A disposing manner may be set based on an actual requirement.

For example, FIG. 7 is a diagram of distribution of the pressure detection component and the pressure adjustment component on the seat belt strap. As shown in FIG. 7, the pressure detection component 12 and the pressure adjustment component 13 may be designed by area on the seat belt strap 1 in a differentiated manner. This is because different parts of a human body have different pressure sensing and identification capabilities, and can bear different pressure thresholds.

In daily life, in a process of wearing the seat belt apparatus, the driver or the passenger usually has a more obvious sense of pressure on the shoulder and the waist than another position. Therefore, the area distribution rules and the distribution densities of the pressure detection components 12 and the pressure adjustment components 13 may be determined based on a difference between bearing thresholds of different parts of the human body. For example, a position at which the seat belt strap 1 is in contact with a sensitive part like the shoulder or the waist of the human body may be provided with more pressure detection components 12 and pressure adjustment components 13 than another position on the seat belt strap 1, and the pressure detection components 12 disposed at the position at which the seat belt strap 1 is in contact with the sensitive part like the shoulder or the waist of the human body have different pressure thresholds.

For example, different pressure thresholds are set for different parts such as the shoulder, an abdomen, the waist, and a leg of the human body, for example, a pressure threshold of the shoulder<aN, a pressure threshold of the waist<bN, a pressure threshold of the abdomen<cN, and a pressure threshold of the leg<dN. It may be understood that a pressure threshold that can be borne by the human body part is not limited in embodiments of this application, and may be determined based on an actual scenario. Details are not described herein.

For example, in the diagram shown in FIG. 7, three pairs of pressure detection components 12 and pressure adjustment components 13 may be disposed at a position at which the seat belt strap 1 is in contact with the shoulder, three pairs of pressure detection components 12 and pressure adjustment components 13, and two pairs of pressure detection components 12 and pressure adjustment components 13 may be disposed at a position at which the seat belt strap 1 is in contact with a waist 1, and two pairs of pressure detection components 12 and pressure adjustment components 13 may be disposed at a position at which the seat belt strap 1 is in contact with a waist 2. A quantity of pressure detection components 12 and a quantity of pressure adjustment components 13 disposed at positions at which the seat belt strap 1 is in contact with different parts may be set based on an actual requirement. This is not limited herein.

In embodiments of this application, a distributed pressure monitoring method of the seat belt strap 1 is different from overall pressure identification. The distributed pressure monitoring method may be used to monitor pressure distribution in different areas, and set differentiated pressure standard values, for example, mainly perform pressure control on an area in which a high sense of pressure is felt, for example, the shoulder. With reference to a distributed pressure adjustment method of the seat belt strap, distributed pressure adjustment can ensure independence of different areas, and pressure adjustment by area can meet pressure requirements of different parts, and is easy to control.

A plurality of pressure detection components and a plurality of pressure adjustment components are disposed on the seat belt strap by area, and are related to human body parts in contact with the seat belt strap, so that pressure information of different human body parts such as the shoulder and the waist can be obtained, and pressure adjustment may be performed based on a requirement, to resolve a current problem that the driver or the passenger is uncomfortable in wearing the seat belt (for example, the seat belt is tightened). For a difference between pressure thresholds that can be borne by different human body parts such as the shoulder and the waist, monitoring and adjustment may be performed by area. This implements differentiated adjustment and control of a pressure on the seat belt strap, and improves comfort in wearing the seat belt.

In an optional embodiment of this application, the pressure detection component 12 and the pressure adjustment component 13 may further communicate with a first controller. The first controller may be a controller disposed in the seat belt inserting board 2, or may be a controller disposed in an in-vehicle infotainment system of the vehicle to which the seat belt apparatus belongs. This is not limited in embodiments of this application.

Correspondingly, the pressure detection component 12 is further configured to send the pressure value to the first controller. The pressure adjustment component 13 is further configured to: receive an adjustment instruction from the first controller, and adjust the pressure value of the seat belt strap 1 based on the adjustment instruction, where the adjustment instruction is determined by the first controller based on the received pressure value.

In embodiments, after detecting the pressure value of the seat belt, the pressure detection component 12 may transmit the pressure value to the first controller. In this way, the first controller may adjust, based on the received pressure value, the pressure value of the seat belt strap 1 through the pressure adjustment component 13.

In an example, the first controller is disposed in the in-vehicle infotainment system of the vehicle to which the seat belt apparatus belongs. In this case, the first controller may communicate with the pressure detection component 12 and the pressure adjustment component 13 in a wireless manner.

In another example, the first controller is disposed in the seat belt inserting board 2. In this case, the first controller may be electrically connected to both the pressure detection component 12 and the pressure adjustment component 13.

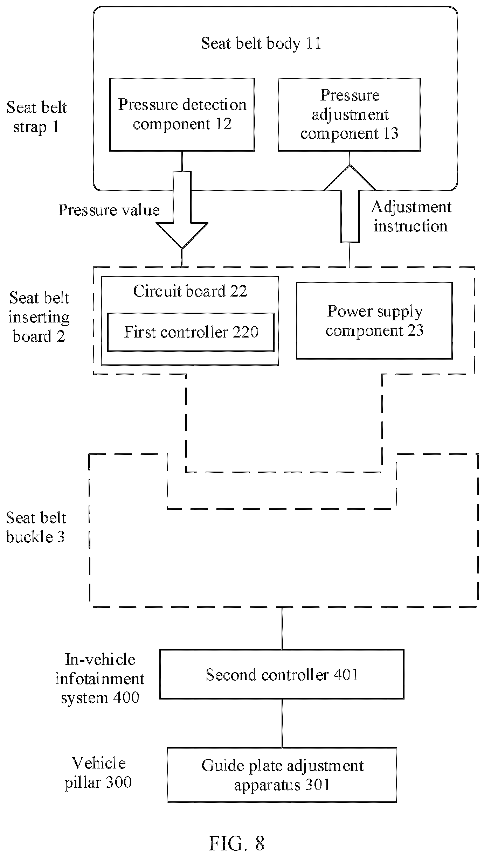

For example, FIG. 8 is a diagram of a signal flow direction when the seat belt apparatus is worn. In the diagram, a circuit board 22 is disposed in the seat belt inserting board 2, and the first controller 220 is deployed on the circuit board 22, as shown in FIG. 8. The first controller 220 is configured to receive the pressure value from the pressure detection component 12, and adjust, based on the pressure value received from the pressure detection component 12 and a position of the pressure detection component 12, the pressure value of the seat belt strap 1 through the pressure adjustment component 13, that is, send the adjustment instruction to the pressure adjustment component 13, to adjust a state of the pressure adjustment component 13.

In actual application, when the pressure detection component 12 and the pressure adjustment component 13 are disposed on the seat belt strap 1 by area, the first controller 220 may be specifically configured to: determine, based on the position of the pressure detection component 12, a pressure threshold of a human body part in contact with the pressure detection component 12, and when determining that the received pressure value is greater than the pressure threshold of the human body part in contact with the pressure detection component 12, adjust a pressure value at the position of the pressure detection component 12 on the seat belt strap 1 by controlling a status of the pressure adjustment component 13.

In embodiments, pressure values in different areas on the seat belt strap are detected through the pressure detection components disposed by area, and the pressure value of the seat belt strap is adjusted by area based on the pressure threshold of the human body part that is in contact with the seat belt strap when the seat belt apparatus is worn, so that comfort of the driver or the passenger wearing the seat belt apparatus can be adjusted in a differentiated manner. This reduces a phenomenon that the user is unwilling to wear the seat belt.

Refer to FIG. 8. In this embodiment, the first controller 220 is further configured to: when the seat belt inserting board 2 is in snap fit with the seat belt buckle 3, send, to a second controller 401, the pressure value obtained from the pressure detection component 12 and the status of the pressure adjustment component 13. The second controller 401 is disposed in an in-vehicle infotainment system 400 of a vehicle to which the seat belt apparatus belongs.

In actual application, when the seat belt inserting board 2 is in snap fit with the seat belt buckle 3, the seat belt apparatus is electrically connected to the in-vehicle infotainment system 400. To enable the in-vehicle infotainment system 400 to display a pressure value of each area on the seat belt strap 1 and/or perform pressure adjustment, the first controller 220 may send the obtained pressure value and the status of the pressure adjustment component 13 to the second controller 401 in the in-vehicle infotainment system 400.

In an example, the first controller 220 is further configured to: when the pressure value at the position of the pressure detection component 12 on the seat belt strap 1 is adjusted to an adjustment threshold of the pressure adjustment component 13, but the pressure value is still greater than the pressure threshold of the human body part in contact with the pressure detection component 12, send a guide adjustment request to the second controller 401. The guide adjustment request is used to request to adjust a position at which the seat belt strap 1 is connected to the guide plate adjustment apparatus 301. The guide plate adjustment apparatus 301 is disposed on a vehicle pillar 300.

In actual application, for a special group (for example, based on a group shape difference, the special group accounts for approximately 5% of a total group) and/or a special scenario (for example, a special wearing situation), a fixed position of the seat belt apparatus may not meet a requirement of the driver or the passenger. In this case, the guide adjustment request may be sent to the second controller 401 in the in-vehicle infotainment system 400, so that the second controller 401 in the in-vehicle infotainment system 400 adjusts the position at which the seat belt strap is connected to the guide plate adjustment apparatus 301, to satisfy comfort wearing of the seat belt in the special scenario.

In embodiments of this application, the second controller can be used to adjust the position at which the seat belt strap is connected to the guide plate adjustment apparatus. As an auxiliary measure for improving comfort in wearing the seat belt apparatus, the second controller can adjust a position of the seat belt strap, and help improve wearing comfort.

Optionally, in an optional embodiment of this application, the first controller 220 is further configured to:
obtain a plurality of strap pressure values detected by the plurality of pressure detection components 12 on the seat belt strap 1; and
if the plurality of strap pressure values are greater than pressure thresholds of human body parts in contact with the corresponding pressure detection components 12, and a distribution rule of the plurality of strap pressure values is inconsistent with a pressure distribution rule of the seat belt apparatus being normally worn, determine that the seat belt apparatus is not correctly worn, and output alarm information.

In actual application, the seat belt apparatus in embodiments may further implement safety warning in the special scenario by using a pressure monitoring technology implemented by the pressure detection component 12 on the seat belt strap 1. For example, when the driver or the passenger does not wear the seat belt properly (a scenario in which some vehicle owners only insert buckles and seat belts do not bypass the bodies), the plurality of strap pressure values in the plurality of areas on the seat belt strap 1 may be identified through the pressure detection components 12 disposed on the seat belt strap 1.

Optionally, if the plurality of strap pressure values are greater than the pressure thresholds of the human body parts in contact with the corresponding pressure detection components, and the distribution rule of the plurality of strap pressure values is inconsistent with the pressure distribution rule of the seat belt apparatus being normally worn, for example, during normal wearing, a pressure value at the shoulder is greater than a pressure value at the abdomen, but when a strap pressure value at the shoulder is greater than a pressure threshold of the shoulder, a strap pressure value at the waist is greater than a pressure threshold of the waist, and the strap pressure value at the abdomen is greater than the strap pressure value at the shoulder (in a normal case, the strap pressure value at the abdomen is less than the strap pressure value at the shoulder), it is determined that the seat belt apparatus is not correctly worn, and the alarm information is output to remind a vehicle owner to correctly wear the seat belt apparatus, so that the driver or the passenger is supervised to wear the seat belt properly.

Optionally, the foregoing describes an overall function of the seat belt apparatus. The following describes, with reference to a structure of the seat belt strap 1, a principle of improving comfort of the driver or the passenger wearing the seat belt apparatus by the seat belt apparatus.

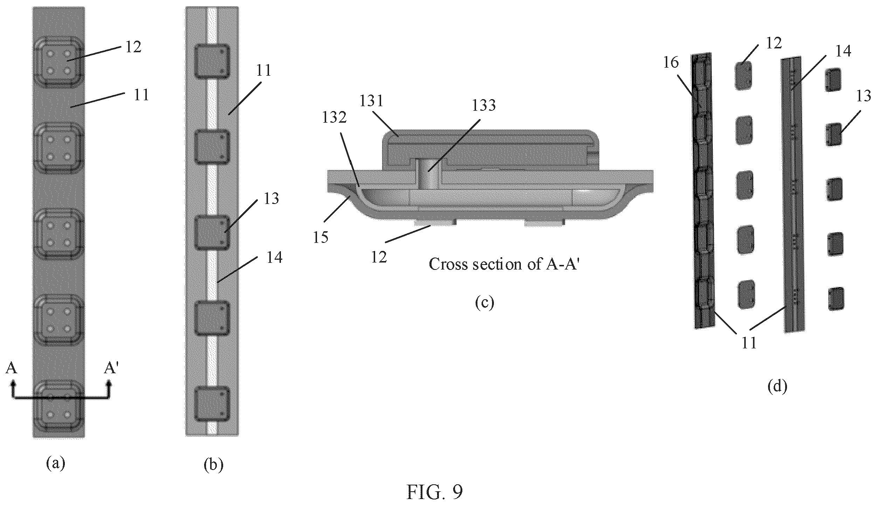

FIG. 9 is a diagram of the structure of the seat belt strap. Therein, (a) in FIG. 9 is a diagram of a first surface of the seat belt body, (b) in FIG. 9 is a diagram of a second surface of the seat belt body, (c) in FIG. 9 is a diagram of a cross section of A-A' on the first surface of the seat belt body, and (d) in FIG. 9 is an exploded view of the seat belt body.

Refer to (a) to (d) in FIG. 9. The pressure detection component 12 is disposed on the first surface of the seat belt body 11. The first surface is a surface that is in contact with the body of a user when the seat belt apparatus is worn. The pressure adjustment component 13 includes an inflation component 131 disposed on the second surface of the seat belt body 11 and an airbag 132 disposed between the seat belt body 11 and the pressure detection component 12.

The seat belt body 11 is further provided with an air hole 133 that communicates the inflation component 131 with the airbag 132, and the air hole 133 is used by the inflation component 131 to inflate and deflate the airbag 132.

In embodiments of this application, as shown in (a) in FIG. 9, the pressure detection components 12 may be implemented through pressure sensors, and are disposed on the first surface of the seat belt body 11 by area. From a perspective of the driver or the passenger, the pressure detection component 12 is located on an inner side of the seat belt body 11, and may be in direct contact with the body of the user, to implement pressure monitoring. In other words, the pressure detection component 12 may implement signal transmission through an electrical connection.

Optionally, the pressure detection component 12, for example, the pressure sensor, may be made of a flexible printed circuit (Flexible Printed Circuit, FPC) material, has features such as light, thin, and free bending and folding, and can be embedded on a surface of the strap to implement, after deformation, pressure detection through a capacitance change.

Refer to (b), (c), and (d) in FIG. 9. The inflation component 131 may be an air pump, for example, a micro air pump. Inflation components 131 are disposed on the second surface of the seat belt body 11 by area. From a perspective of the driver or the passenger, the inflation component 131 is located on an outer side of the seat belt body 11. Airbags 132 are disposed in the seat belt body 11 by area. The airbag 132 may be filled with air to relieve body pressure, and the airbag 132 may be restored to a sheet state after being deflated. Optionally, after a signal corresponding to the adjustment instruction is transmitted to the inflation component 131, the airbag 132 may be inflated and deflated.

For example, the inflation component 131 is implemented according to a pressure principle, and has a simple control function and does not consume power. A non-return valve (not shown) is disposed on the inflation component 131, and can ensure no leakage after inflation.

Optionally, as shown in FIG. 8, a power supply component 23 is further disposed in the seat belt inserting board 2. As shown in (c) and (d) in FIG. 9, a first line 14 is disposed on the seat belt body 11. The first line 14 is configured to electrically connect the inflation component 131 and the power supply component 23 that is disposed in the seat belt inserting board 2.

In embodiments of this application, the power supply component 23 disposed in the seat belt inserting board 2 is configured to supply power to the pressure adjustment component 13 disposed on the seat belt body 11. Refer to (d) in FIG. 9. The first line 14 may electrically connect the inflation component 131 disposed on the seat belt body 11 and the power supply component 23 disposed in the seat belt inserting board 2.

Optionally, the power supply component 23 may be a rechargeable battery. When the seat belt inserting board 2 is in snap fit with the seat belt buckle 3, the rechargeable battery may be charged through the in-vehicle infotainment system 400, and an electrical connection between the inflation component 131 and the power supply component is implemented.

Optionally, as shown in (c) in FIG. 9, the seat belt strap 1 further includes an airbag wrapping layer 15, and the pressure detection component 12 is disposed on the airbag wrapping layer 15. The airbag 132 is disposed between the seat belt body 11 and the airbag wrapping layer 15.

For example, when the first controller is disposed in the seat belt inserting board 2, a second line 16 connecting the pressure detection component 12 and the first controller is further disposed on the airbag wrapping layer 15.

The pressure detection component 12 is configured to transmit the detected pressure value to the first controller through the second line 16.

In embodiments of this application, the airbag wrapping layer 15 may wrap the airbag 132, and attach the airbag 132 to the seat belt body 11, so that the inflation component 131 can inflate and deflate the airbag 132 through the air hole provided on the seat belt body 11. Optionally, the second line 16 disposed on the seat belt body 11 can connect the plurality of pressure detection components 12 and pressure detection components 12 disposed on the seat belt body 11 and the first controller disposed in the seat belt inserting board 2, to transmit a pressure signal.

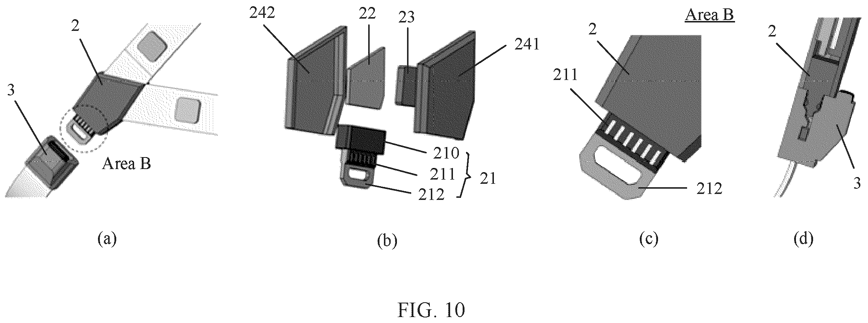

For example, FIG. 10 is a diagram of a structure of the seat belt inserting board and the seat belt buckle. Herein, (a) in FIG. 10 is a diagram of a second surface when the seat belt inserting board 2 is not snapped with the seat belt buckle 3, (b) in FIG. 10 is an exploded view of the seat belt inserting board 2, (c) in FIG. 10 is an enlarged diagram of an area B in (a) in FIG. 10, and (d) in FIG. 10 is a diagram of a first surface when the seat belt inserting board 2 is snapped with the seat belt buckle 3. It may be understood that, from a perspective of the driver or the passenger, the first surface is the inner side of the seat belt body 11. When the seat belt apparatus is correctly worn, the first surface may be in direct contact with the body of the user. The second surface is the outer side of the seat belt body 11. When the seat belt apparatus is correctly worn, the second surface is usually not in direct contact with the body of the user.

Refer to (a) to (d) in FIG. 10. A first snap-fit part 21 is disposed at an end part of the seat belt inserting board 2, and an electrical connection component 211 is disposed on the first snap-fit part 21. The seat belt buckle 3 includes a second snap-fit part (not shown) matching the first snap-fit part 21. When the first snap-fit part 21 is in snap fit with the second snap-fit part, the electrical connection component 211 is configured to electrically connect the seat belt inserting board 2 and the seat belt buckle 3.

For example, refer to (b) and (c) in FIG. 10. The first snap-fit part 21 may include a tongue connector 210, a metal tongue 212 fastened to the tongue connector 210, and an electrical connection component 211 disposed on the metal tongue 212. The tongue connector 210 may be disposed in the seat belt inserting board 2, for example, wrapped between a housing 241 and a housing 242. In addition, the circuit board 22 and the power supply component 23 may be further disposed in the seat belt inserting board 2 between the housing 241 and the housing 242, and a device and/or a component for implementing a function of the first controller 220 are/is deployed on the circuit board 22.

Optionally, the second snap-fit part in the seat belt buckle 3 may include an inner spring plate. Refer to (d) in FIG. 10. When the metal tongue 212 in the seat belt inserting board 2 is in snap fit with the seat belt buckle 3, the inner spring plate is connected to the electrical connection component 211, so that the first controller 220 may transmit the obtained pressure value and the status of the pressure adjustment component 13 to the in-vehicle infotainment system through an electrical connection.

In embodiments of this application, the structure of the seat belt inserting board 2 and the seat belt buckle 3 shown in FIG. 10 can implement a function of detecting whether the seat belt apparatus is fastened or unfastened, can implement a function of transmitting an electrical signal, and can further implement a power supply function.

For example, when it is detected that the seat belt is worn, the pressure detection components 12 disposed on the seat belt strap 1 by area may be triggered to perform pressure detection, to detect pressure values of areas that are on the seat belt strap 1 and that are in contact with different parts of the human body, and determine whether a pressure threshold of each area is reached. A monolithic processor and/or a chip, namely, the first controller, is disposed in the seat belt inserting board 2. As a control unit of the seat belt apparatus, when receiving the pressure value transmitted by the pressure detection component 12, the first controller may transmit the adjustment instruction to the inflation component 131 based on the pressure value, to control the inflation component 131 to start, to fill the airbag 132 with air.

Optionally, the first controller 220 may further communicate with the second controller 401 in the in-vehicle infotainment system 400, to adjust the position at which the seat belt strap 1 is connected to the guide plate adjustment apparatus 301. To be specific, when the pressure detection component 12 and the pressure adjustment component 13 cooperate to work for a period of time, after the pressure adjustment component 13 performs adjustment a plurality of times, if the strap pressure value detected by the pressure detection component 12 still does not reach a standard value, the guide adjustment request may be sent to the second controller 401 in the in-vehicle infotainment system 400, to adjust the position at which the seat belt strap 1 is connected to the guide plate adjustment apparatus 301.

Optionally, when the seat belt apparatus is unfastened, the power supply component 23 in the seat belt inserting board 2 may supply power to the connected inflation component 131, so that the inflation component 131 controls the airbag 132 to deflate. After the airbag 132 is deflated, a thickness of the seat belt strap 1 is restored to a normal size, and the retractor is retracted.

It can be learned from the foregoing analysis that the seat belt apparatus provided in embodiments of this application includes the seat belt strap, the seat belt inserting board that penetrates the seat belt strap, and the seat belt buckle that is in snap fit with the seat belt inserting board. The pressure detection component and the pressure adjustment component are disposed on the seat belt body of the seat belt strap. When the seat belt inserting board is in snap fit with the seat belt buckle, the pressure detection component is configured to detect the pressure value of the seat belt strap, and the pressure adjustment component is configured to adjust the pressure value of the seat belt strap. In this way, the pressure value of the seat belt strap may be adaptively adjusted based on different body shape features, to reduce a sense of pressure on a body part when the driver and the passenger wear the seat belt, and improve comfort of the driver or the passenger wearing the seat belt, so as to reduce, to some extent, a probability that the driver or the passenger is unwilling to wear the seat belt.

With reference to the seat belt apparatus provided in the foregoing embodiment, an embodiment of this application further provides a vehicle seat.

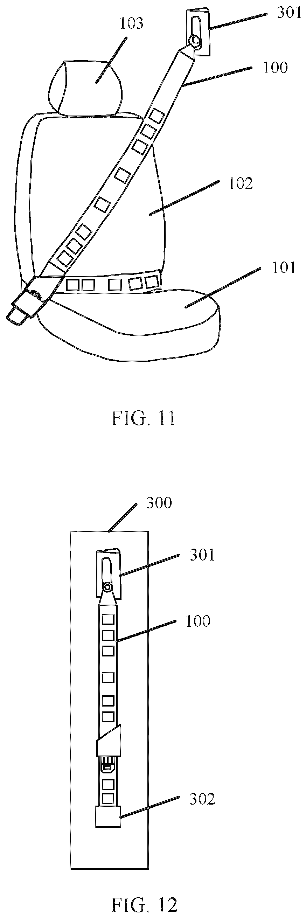

For example, FIG. 11 is a diagram of a structure of the vehicle seat according to an embodiment of this application. As shown in FIG. 11, the vehicle seat may include the seat belt apparatus 100 in the embodiments shown in FIG. 4 to FIG. 10. For a structure and an implementation principle of the seat belt apparatus 100, refer to the descriptions in the embodiments shown in FIG. 4 to FIG. 10. Details are not described again in this embodiment.

Optionally, refer to FIG. 11. The vehicle seat includes a cushion 101 (which may also be referred to as a bolster), a back rest 102, and a head rest 103. The cushion 101 is mainly configured to support hips of a driver or a passenger. The back rest 102 is connected to a rear part of the cushion 101 in a forward-backward tilting manner, and is mainly configured to support the back of the driver or the passenger. In addition, an angle of the back rest 102 relative to the cushion 101 may be adjusted through a back angle adjustment mechanism (not shown), for example, the back rest 102 is tilted forward, tilted backward, or placed upside down. The head rest 103 is mounted on the top of the back rest 102, and is mainly configured to support the head and neck of the driver or the passenger.

It may be understood that the cushion 101, the back rest 102, and the head rest 103 belong to a seat body. In addition to the seat body, the vehicle seat may further include another structural element, for example, a seat guide rail disposed between a vehicle floor and the seat body. This is not limited in embodiments of this application.

It may be understood that the vehicle seat may be a driver seat, or may be a front passenger seat or another seat disposed behind the driver seat or the front passenger seat, for example, a seat in a second row or a seat in a third row. When the vehicle seat is a seat to which a plurality of seats are connected, a structural element used to configure the seat belt apparatus may be set by using a seat as a unit, and a corresponding seat belt apparatus is configured by using the seat as a unit. Structures of seat belt apparatuses of units may be the same or may be different. Details are not described herein.

In a possible implementation design of this embodiment, the vehicle seat may further include a first fastening part. The first fastening part is located on a first side of the cushion of the vehicle seat, the first fastening part is configured to fasten a first end of the seat belt strap 1 included in the seat belt apparatus, and a second end of the seat belt strap 1 is connected to the guide plate adjustment apparatus 301 of the vehicle pillar 300. The first side is a side close to the vehicle pillar 300.

In a possible implementation design of this embodiment, the vehicle seat may further include a second fastening part. The second fastening part is located on a second side of the cushion of the vehicle seat, and the second fastening part is configured to fasten the seat belt buckle 3 of the seat belt apparatus. The second side is a side away from the vehicle pillar 300.

It may be understood that, when the vehicle seat is the driver seat or the front passenger seat, the vehicle pillar 300 connected to the second end of the seat belt strap 1 is a B-pillar of the vehicle. When the vehicle seat is the seat in the second row or the seat in the third row, the vehicle pillar 300 connected to the second end of the seat belt strap 1 is a C-pillar of the vehicle.

In an embodiment of this application, the first fastening part and the second fastening part that are configured to fasten the seat belt apparatus may be disposed in the vehicle, and the seat belt apparatus is used together with the vehicle seat or the vehicle through a fastening structure in the vehicle.

In another embodiment of this application, in the diagram shown in FIG. 11, the vehicle seat includes the seat belt apparatus. However, it may be understood that, as an intermediate product form, the vehicle seat may alternatively not include the seat belt apparatus, but needs to be used together with the seat belt apparatus in the vehicle.

Further, an embodiment of this application further provides a vehicle, including the seat belt apparatus 100 shown in any one of the embodiments in FIG. 4 to FIG. 10. For a structure and an implementation principle of the seat belt apparatus 100, refer to the descriptions in the embodiments shown in FIG. 4 to FIG. 10. Details are not described again in this embodiment.

Optionally, FIG. 12 is a diagram of a structure of the vehicle pillar. As shown in FIG. 12, the vehicle further includes the guide plate adjustment apparatus 301, the first fastening part 302, and the second fastening part (not shown). The guide plate adjustment apparatus 301 is disposed at a first position of the vehicle pillar 300, the first fastening part 302 is disposed at a second position of the vehicle pillar 300, and the second fastening part is connected to the seat cushion. The first position is higher than the seat back rest, and the second position is lower than or flush with the seat cushion.

The guide plate adjustment apparatus 301 is configured to fasten the first end of the seat belt strap 1 included in the seat belt apparatus 100, and the first fastening part 302 is configured to fasten the second end of the seat belt strap 1 included in the seat belt apparatus 100. The second fastening part is configured to fasten the seat belt buckle 3 of the seat belt apparatus 100.

In embodiments of this application, the guide plate adjustment apparatus 301, the first fastening part 302, and the second fastening part may be disposed on the vehicle. In this way, when the vehicle seat is adjusted, a connection position of the seat belt apparatus is not affected.

In a possible implementation of this application, the vehicle further includes the second controller 401 disposed in the in-vehicle infotainment system 400. The second controller 401 is configured to: receive a pressure value detected by the pressure detection component 12 and a status of the pressure adjustment component 13, and adjust a pressure value of the seat belt strap 1 based on the pressure value and the status of the pressure adjustment component 13.

In embodiments of this application, the second controller 401 may directly perform wireless communication with the pressure detection component 12 and the pressure adjustment component 13 that are disposed on the seat belt strap 1. In this way, when the seat belt inserting board 2 is in snap fit with the seat belt buckle 3, the pressure detection component 12 may directly send the detected pressure value to the second controller, and the pressure adjustment component 13 may send the current status of the pressure adjustment component 13 to the second controller. Correspondingly, the second controller may receive the pressure value and the status of the pressure adjustment component 13, and adjust the pressure value of the seat belt strap 1 through the pressure adjustment component 13.

It may be understood that, for implementation principles of the pressure adjustment component 13 and the pressure detection component 12, refer to the descriptions in the foregoing embodiments. Details are not described herein again.

In this possible implementation of this application, the second controller 401 is further configured to: when a first condition is met, adjust a position at which the seat belt strap 1 is fastened to the guide plate adjustment apparatus 301.

In an example, the first condition is that a pressure value at the position of the pressure detection component 12 on the seat belt strap 1 is adjusted to an adjustment threshold of the pressure adjustment component 13, and the pressure value is greater than a pressure threshold of a human body part in contact with the pressure detection component 12.

In this example, when the second controller 401 directly communicates with the pressure detection component 12 and the pressure adjustment component 13, if the second controller adjusts the pressure value of the seat belt strap 1 a plurality of times based on the received pressure value and the status of the pressure adjustment component 13, but the pressure value of the seat belt strap 1 still cannot meet a requirement, to be specific, the pressure value at the position of the pressure detection component 12 on the seat belt strap 1 is adjusted to the adjustment threshold of the pressure adjustment component 13, but the pressure value is still greater than the pressure threshold of the human body part in contact with the pressure detection component 12, this may be caused by an excessively high position at which the seat belt strap 1 is fastened to the guide plate adjustment apparatus. In this case, the second controller may be triggered to adjust the position at which the seat belt strap 1 is fastened to the guide plate adjustment apparatus, to meet requirements of different scenarios.

In another example, the first condition is that a guide adjustment request is received, and the guide adjustment request is used to request to adjust the position at which the seat belt strap is connected to the guide plate adjustment apparatus.

In this example, after the seat belt inserting board 2 is in snap fit with the seat belt buckle 3, the second controller may communicate with the first controller disposed in the seat belt inserting board 2, for example, receive, from the first controller, the pressure value and the status of the pressure adjustment component 13 that are obtained by the first controller, and receive the guide adjustment request from the first controller, so that when the guide adjustment request is received, the second controller may be triggered to adjust the position at which the seat belt strap 1 is fastened to the guide plate adjustment apparatus, to meet requirements of different scenarios.

It may be understood that a trigger condition for the first controller to send the guide adjustment request to the second controller is: The first controller determines that the pressure value at the position of the pressure detection component 12 on the seat belt strap 1 is adjusted to the adjustment threshold of the pressure adjustment component 13, and the pressure value is greater than the pressure threshold of the human body part in contact with the pressure detection component 12.

In embodiments of this application, the seat belt apparatus in the vehicle cooperates with the second controller in the vehicle, to automatically adjust the pressure value of the seat belt strap 1, without a manual operation of the driver or the passenger. In this case, a sense of pressure of the seat belt strap 1 on different parts of the body of the driver or the passenger is reduced, and comfort of wearing the seat belt is improved.

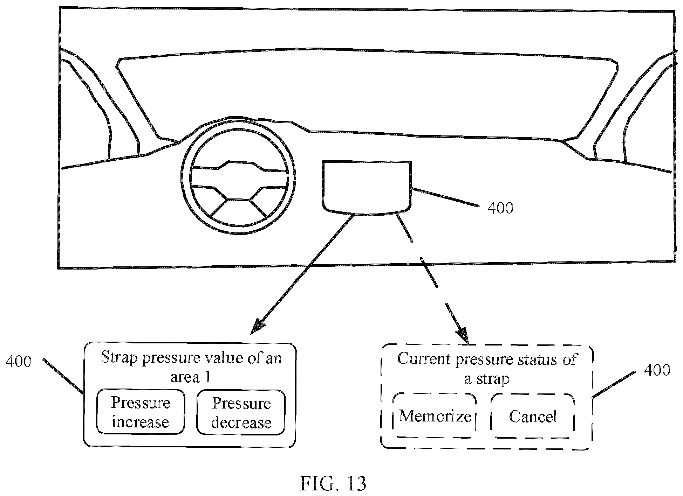

FIG. 13 is a diagram of a position of the in-vehicle infotainment system in the vehicle. As shown in FIG. 13, in embodiments, the vehicle may further include the in-vehicle infotainment system 400.

In an embodiment of this application, the in-vehicle infotainment system 400 of the vehicle is further configured to display a pressure adjustment control in at least one area on the seat belt strap 1. Correspondingly, the second controller is further configured to: when an operation on the pressure adjustment control detected, adjust a pressure value of the corresponding area on the seat belt strap 1.

Refer to FIG. 13. The in-vehicle infotainment system 400 may display a pressure adjustment control of a strap pressure value of each area, for example, a pressure adjustment control of a strap pressure value of an area 1. Optionally, the pressure adjustment control may include a pressure increase control and a pressure decrease control. The pressure increase control is used to increase the strap pressure value of the area 1, and the pressure decrease control is used to decrease the strap pressure value of the area 1. In other words, in embodiments, the driver or the passenger may set a strap pressure status of each area on the in-vehicle infotainment system 400, to meet a differentiated requirement of the driver or the passenger.

In another embodiment of this application, the in-vehicle infotainment system 400 of the vehicle is further configured to display a pressure setting control for the seat belt strap 1. Correspondingly, the second controller is further configured to: when an operation on the pressure setting control is detected, determine whether to memorize a current pressure status of the seat belt strap 1, and perform a corresponding operation.

Refer to FIG. 13. The in-vehicle infotainment system 400 may further display a strap pressure status of each area. For example, after the driver or the passenger adjusts a strap pressure value of an area, a pop-up window may be displayed in the in-vehicle infotainment system 400. The pop-up window may include a pressure setting control. Optionally, the pressure setting control may include a memorize control and a cancel control. The memorize control is used to memorize a current strap pressure value of the area, and the cancel control is used to exit a current procedure.

In other words, in embodiments, after setting the strap pressure status of each area in the in-vehicle infotainment system, the driver or the passenger may use a memory function of the in-vehicle infotainment system. In this way, a personalized requirement of the driver or the passenger can be improved, and use experience is improved.

For example, when the driver or the passenger wears the seat belt for the first time, strap pressure values of different areas may be set through the in-vehicle infotainment system. If the driver or the passenger feels uncomfortable in a process of wearing the seat belt apparatus, the driver or the passenger may actively stretch the strap. In this case, the pressure detection component may detect that the pressure value of the strap decreases, and the in-vehicle infotainment system provides a memory setting function.

The vehicle provided in embodiments of this application can meet differentiated sensing requirements of different drivers and passengers. If the driver or the passenger feels uncomfortable in the wearing process and want to perform adjustment again, adjustment may be performed through the pressure adjustment component displayed on the in-vehicle infotainment system. When the pressure detection component detects a change of the pressure value of the seat belt strap, the in-vehicle infotainment system may provide the function of whether to perform memorizing, that is, display the pressure setting control to remind the driver or the passenger whether to memorize a current status of the seat belt. When the driver or the passenger operates the memorize control, the vehicle memorizes the current pressure status of the strap, and stores the current pressure status to a current vehicle owner account. In other words, the driver or the passenger may set the strap pressure value of each area through the in-vehicle infotainment system, and the in-vehicle infotainment system can memorize the strap pressure value after self-adjustment in a driving process. This further meets a requirement of an individual for self-defined adjustment and memory.

The foregoing describes the seat belt apparatus, the vehicle seat, and the vehicle. The following describes an adjustment solution of the seat belt apparatus by using a controller in the vehicle as an execution body. For content that is not mentioned in the seat belt apparatus, the vehicle seat, and the vehicle, refer to the descriptions in the foregoing embodiments. Details are not described below again.

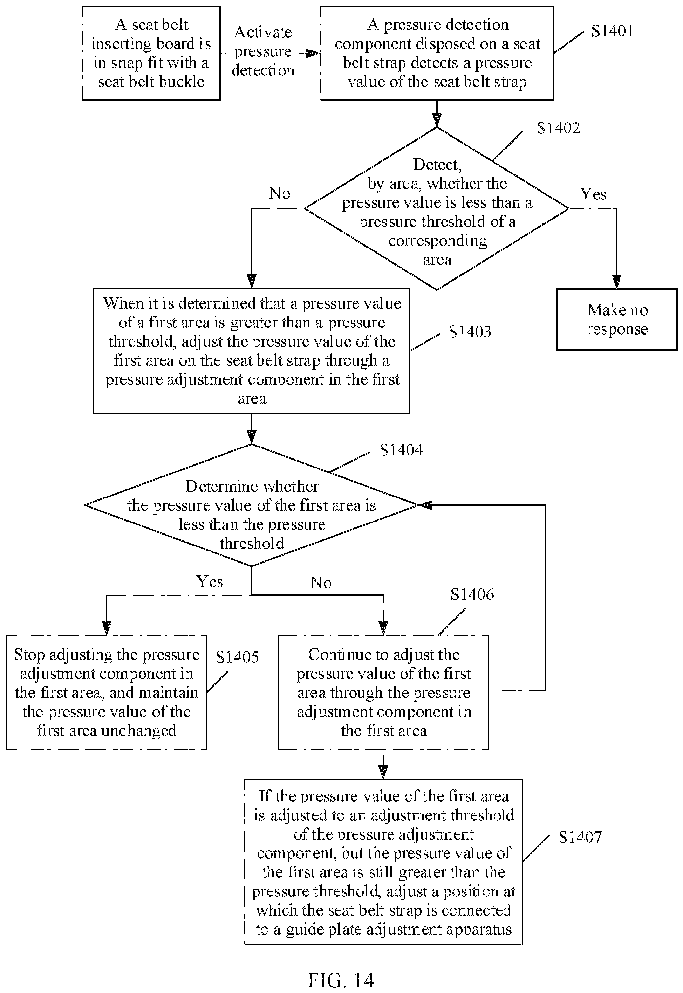

For example, FIG. 14 is a schematic flowchart of an adjustment method for a seat belt apparatus according to an embodiment of this application. The method is applied to a controller in a vehicle, and the controller is communicatively connected to the seat belt apparatus in the foregoing embodiments. As shown in FIG. 14, the method may include the following steps.

S1401: When the seat belt inserting board is in snap fit with the seat belt buckle, obtain a pressure value detected by the pressure detection component and a status of the pressure adjustment component.

In embodiments of this application, a driver or a passenger wears the seat belt apparatus, that is, the seat belt inserting board is in snap fit with the seat belt buckle, so that the pressure detection component disposed on the seat belt strap can be triggered to start to detect the strap pressure value of an area in which the pressure detection component is located. Correspondingly, after detecting the pressure value of the area in which the pressure detection component is located, the pressure detection component transmits the pressure value to the controller of the vehicle. In this way, when the seat belt inserting board is in snap fit with the seat belt buckle, the controller can obtain the pressure value detected by the pressure detection component.

It may be understood that, when the seat belt inserting board is in snap fit with the seat belt buckle, the controller may determine the status of the pressure adjustment component based on an adjustment instruction delivered to the pressure adjustment component, or if the pressure adjustment component and the controller can directly communicate with each other, the controller may alternatively receive the status of the pressure adjustment component that is reported by the pressure detection component.

S1402: The controller detects, by area, whether the pressure value is less than a pressure threshold of a corresponding area. If the pressure value is less than the pressure threshold of the corresponding area, no response is made; or if the pressure value is not less than the pressure threshold of the corresponding area, S1403 is performed.

S1403: When it is determined that a pressure value of a first area is greater than a pressure threshold, adjust the pressure value of the first area on the seat belt strap through a pressure adjustment component in the first area.

When obtaining a pressure value of each area and a status of a pressure adjustment component in each area from the pressure detection component, the controller may determine whether the pressure value of each area meets a comfort requirement of a user.

In an example, if the pressure value of each area on the seat belt strap is less than a pressure threshold of the corresponding area, it indicates that the pressure value of the seat belt strap meets the comfort requirement of the user. In this case, no pressure adjustment needs to be performed, and therefore no response is made.

In another example, if pressure values of some areas on the seat belt strap are greater than pressure thresholds of the corresponding areas, for example, the pressure value of the first area is greater than the pressure threshold, the controller may adjust the pressure value of the seat belt strap through the pressure adjustment component based on the pressure value. For example, the controller sends the adjustment instruction to the pressure adjustment component, to change a current status of the pressure adjustment component, so as to adjust the pressure value of the first area on the seat belt strap.

It may be understood that the first area may be any area on the seat belt strap. This is not limited in this embodiment.

Optionally, the controller may determine, based on a position of the pressure detection component, a pressure threshold of a human body part in contact with the pressure detection component, and when determining that the received pressure value is greater than the pressure threshold of the human body part in contact with the pressure detection component, adjust the pressure value at the position of the pressure detection component on the seat belt strap by controlling the status of the pressure adjustment component.

In actual application, because different parts of a human body have different capabilities of sensing pressure distribution, a maximum comfort pressure that can be borne is also different. For example, a shoulder and a waist can have a more obvious sense of pressure. Therefore, pressure thresholds of different parts of the human body may be separately set in the controller, and a plurality of pressure detection components and a plurality of pressure adjustment components are disposed on the seat belt strap by area. Therefore, when the seat belt inserting board is in snap fit with the seat belt buckle, a pressure detection component in each area may detect a strap pressure value of an area in which the pressure detection component is located.

In this embodiment, when obtaining the pressure value of the pressure detection component, the controller may determine the position of the pressure detection component, and may determine, based on the position of the pressure detection component, the pressure threshold of the human body part in contact with the pressure detection component, and determine whether the pressure value is less than the pressure threshold of the human body part in contact with the pressure detection component. If the pressure value is less than the pressure threshold of the human body part in contact with the pressure detection component, the controller starts to control the pressure adjustment component to adjust the pressure value at the position of the pressure detection component on the seat belt strap. If the pressure value is not less than the pressure threshold of the human body part in contact with the pressure detection component, the controller makes no response.

S1404: Determine whether the pressure value of the first area is less than the pressure threshold; and if the pressure value of the first area is less than the pressure threshold, perform S1405; or if the pressure value of the first area is not less than the pressure threshold, perform S1406.

S1405: Stop adjusting the pressure adjustment component in the first area, and maintain the pressure value of the first area unchanged.

For example, the pressure adjustment component includes an inflation component and an airbag. When the pressure value of the first area is less than the pressure threshold of the first area, the controller may inflate the airbag in the first area through the inflation component in the first area, stop inflation when the pressure value of the first area is less than the pressure threshold, and maintain a filling amount of the airbag in the first area unchanged.

S1406: Continue to adjust the pressure value of the first area through the pressure adjustment component in the first area.

S1407: If the pressure value of the first area is adjusted to an adjustment threshold of the pressure adjustment component, but the pressure value of the first area is still greater than the pressure threshold, adjust a position at which the seat belt strap is connected to the guide plate adjustment apparatus.

It may be understood that, in the process of adjusting the pressure value of the first area through the pressure adjustment component, the controller may periodically or in real time detect whether the pressure value of the first area is less than the pressure threshold. When the pressure value of the first area is less than the pressure threshold, the controller stops adjusting the pressure adjustment component in the first area, and maintains the pressure value of the first area unchanged. Otherwise, the controller continues to adjust the pressure value of the first area until the pressure value of the first area is adjusted to the adjustment threshold of the pressure adjustment component.

Optionally, when the pressure value of the first area is adjusted to the adjustment threshold of the pressure adjustment component, if the pressure value of the first area still cannot meet a comfort requirement of the driver or the passenger, the position at which the seat belt strap is connected to the guide plate adjustment apparatus may be adjusted through the guide plate adjustment apparatus mounted on the vehicle pillar.

In this embodiment of this application, when the seat belt inserting board is in snap fit with the seat belt buckle, the pressure detection component disposed on the seat belt strap detects the pressure value of the seat belt strap, and the controller detects, by area, whether the pressure value is less than the pressure threshold of the corresponding area. If the pressure value of the first area is less than the pressure threshold, the controller stops adjusting the pressure adjustment component in the first area, and maintains the pressure value of the first area unchanged. If the pressure value of the first area is greater than the pressure threshold, the controller adjusts the pressure value of the first area on the seat belt strap through the pressure adjustment component in the first area. When the pressure value of the first area is adjusted to the adjustment threshold of the pressure adjustment component but the pressure value of the first area is still greater than the pressure threshold, the controller adjusts the position at which the seat belt strap is connected to the guide plate adjustment apparatus. **In** this technical solution, pressure values of seat belt straps may be adjusted based on requirements of different drivers and passengers, and different parts. This improves comfort of the driver or the passenger wearing the seat belt apparatus.

**In** an optional embodiment of this application, the adjustment method for a seat belt apparatus may further include the following steps:
obtaining a plurality of strap pressure values detected by the plurality of pressure detection components on the seat belt strap; and
if the plurality of strap pressure values are greater than pressure thresholds of human body parts in contact with the corresponding pressure detection components, and a distribution rule of the plurality of strap pressure values is inconsistent with a pressure distribution rule of the seat belt apparatus being normally worn, determining that the seat belt apparatus is not correctly worn, and outputting alarm information.

Optionally, the plurality of pressure detection components (for example, disposed by area) are disposed on the seat belt strap, and each pressure detection component may detect a strap pressure value of a corresponding area or position and transmit the strap pressure value to the controller. Correspondingly, the controller may obtain strap pressure values of a plurality of areas on the seat belt strap, and analyze a distribution rule of the pressure values.

For example, in a scenario in which the driver or the passenger does not wear the seat belt apparatus correctly, the controller may implement a safety warning in a special scenario through pressure monitoring on the seat belt strap. For example, in a scenario in which some drivers or passengers insert only buckles and seat belt straps do not bypass the bodies, if the plurality of strap pressure values are greater than the pressure threshold of the human body part in contact with the corresponding pressure detection component, and the distribution rule of the plurality of strap pressure values is inconsistent with the pressure distribution rule of the seat belt apparatus being normally worn (for example, a pressure value on an abdomen is usually less than a pressure value on a shoulder). In this case, it may be considered that the seat belt apparatus is not correctly worn, and the alarm information is output, to remind the driver or the passenger to correctly wear the seat belt apparatus.

In a possible implementation of this embodiment of this application, the controller may be disposed in the seat belt inserting board. In this case, that the controller obtains a pressure value detected by the pressure detection component and a status of the pressure adjustment component is specifically: receiving the pressure value from the pressure detection component and the status from the pressure adjustment component. In other words, the controller may obtain, in the seat belt inserting board, the status of the pressure adjustment component through a first line disposed on the seat belt strap, and obtain the status of the pressure detection component through a second line disposed on the seat belt strap.

Correspondingly, in this possible implementation, when the pressure value at the position of the pressure detection component on the seat belt strap is adjusted to the adjustment threshold of the pressure adjustment component, but the pressure value is still greater than the pressure threshold of the human body part in contact with the pressure detection component, the controller sends a guide adjustment request to the second controller. The guide adjustment request is used to request to adjust the position at which the seat belt strap is connected to the guide plate adjustment apparatus, and the second controller is a controller disposed in the in-vehicle infotainment system of the vehicle.

It may be understood that, if the seat belt apparatus cannot enable, based on an adjustment function of the seat belt apparatus, the pressure value of the seat belt strap to meet the comfort requirement of the driver or the passenger, that is, the pressure value at the position of the pressure detection component on the seat belt strap is adjusted to the adjustment threshold of the pressure adjustment component, but the pressure value is still greater than the pressure threshold of the human body part in contact with the pressure detection component, auxiliary adjustment may be performed through the second controller in the in-vehicle infotainment system and the guide plate adjustment apparatus disposed on the vehicle pillar.

For example, after receiving the guide adjustment request, the second controller may adjust the position at which the seat belt strap is connected to the guide plate adjustment apparatus, for example, automatically lower or move up the position at which the seat belt strap is connected to the guide plate adjustment apparatus, to meet comfort requirements of different people or in special scenarios.

In a possible implementation of this embodiment of this application, the controller is disposed in the in-vehicle infotainment system of the vehicle. In this case, that the controller obtains a pressure value detected by the pressure detection component and a status of the pressure adjustment component is specifically: receiving the pressure value from the pressure detection component and the status from the pressure adjustment component; or receiving the pressure value of the pressure detection component and the status of the pressure adjustment component from the first controller, where the first controller is a controller disposed in the seat belt inserting board.

In an example, the controller disposed in the in-vehicle infotainment system of the vehicle may communicate with the pressure detection component and the pressure adjustment component in a wireless manner. Therefore, the controller may directly receive the pressure value detected by the pressure detection component from the pressure detection component, and receive the current status of the pressure adjustment component from the pressure adjustment component.

In another example, when the first controller is disposed in the seat belt inserting board, the controller disposed in the in-vehicle infotainment system of the vehicle may communicate with the first controller. In this way, after obtaining the pressure value of the pressure detection component and the status of the pressure adjustment component, the first controller may transmit the pressure value of the pressure detection component and the status of the pressure adjustment component to the controller in the in-vehicle infotainment system, so that the controller can receive the pressure value of the pressure detection component and the status of the pressure adjustment component from the first controller.

In this possible implementation, when a first condition is met, the controller may adjust, based on the pressure value and the status of the pressure adjustment component, the position at which the seat belt strap is fastened to the guide plate adjustment apparatus.

In an example, the first condition is that the pressure value at the position of the pressure detection component on the seat belt strap is adjusted to the adjustment threshold of the pressure adjustment component, and the pressure value is greater than the pressure threshold of the human body part in contact with the pressure detection component.

Optionally, the controller may determine, based on the received pressure value and the status of the pressure adjustment component, whether the position at which the seat belt strap is connected to the guide plate adjustment apparatus needs to be adjusted. For example, when the pressure value at the position of the pressure detection component on the seat belt strap is adjusted to the adjustment threshold of the pressure adjustment component, and the pressure value is greater than the pressure threshold of the human body part in contact with the pressure detection component, the controller may adjust, based on the pressure value and the status of the pressure adjustment component, the position at which the seat belt strap is fastened to the guide plate adjustment apparatus.

In another example, the first condition is that the guide adjustment request is received, and the guide adjustment request is used to request to adjust the position at which the seat belt strap is connected to the guide plate adjustment apparatus.

Optionally, when determining that adjustment of the seat belt apparatus cannot meet the comfort requirement of the driver or the passenger, the first controller disposed in the seat belt inserting board may send the guide adjustment request to the controller disposed in the in-vehicle infotainment system. Therefore, when receiving the guide adjustment request of the first controller, the controller may trigger adjustment of the position at which the seat belt strap is fastened to the guide plate adjustment apparatus.

In an optional embodiment of this application, the adjustment method for a seat belt apparatus may further include the following steps:
when an operation on a pressure adjustment control is detected, adjusting a pressure value of a corresponding area on the seat belt strap, where the pressure adjustment control is displayed through the in-vehicle infotainment system of the vehicle; and/or when an operation on a pressure setting control is detected, determining whether to memorize a current pressure status of the seat belt strap, and performing a corresponding operation, where the pressure setting component is displayed through the in-vehicle infotainment system of the vehicle.

Optionally, refer to the diagram shown in FIG. 13. In a pressure adjustment process, a pressure adjustment control in at least one area on the seat belt strap may be displayed through the in-vehicle infotainment system. Correspondingly, the driver or the passenger may operate the pressure adjustment component based on a requirement of the driver or the passenger. For example, if the driver or the passenger touches or taps a pressure increase control, the controller increases a strap pressure value of a corresponding area. If the driver or the passenger touches or taps a pressure decrease control, the controller decreases a strap pressure value of a corresponding area.

In embodiments, the driver or the passenger may set a strap pressure status of each area on the in-vehicle infotainment system, to meet a differentiated requirement of the driver or the passenger.

Optionally, refer to the diagram shown in FIG. 13. After the pressure adjustment process ends, a pressure setting control of the seat belt strap may be further displayed through the in-vehicle infotainment system, to prompt the driver or the passenger whether to memorize pressure setting information for the seat belt strap. For example, if the driver or the passenger touches or taps a memorize control, the controller saves the current strap pressure value of the seat belt strap. If the driver or the passenger touches or taps a cancel control, the controller exits the current process, and doses not save the current strap pressure value of the seat belt strap.

In embodiments, after setting the strap pressure status of each area in the in-vehicle infotainment system, the driver or the passenger may use a memory function of the in-vehicle infotainment system. In this way, a personalized requirement of the driver or the passenger can be improved, and use experience is improved.

In embodiments of this application, an apparatus for implementing the adjustment method for a seat belt apparatus shown in FIG. 14 may be divided into functional modules. For example, each functional module may be obtained through division based on each function, or two or more functions may be integrated into one processing module. The integrated module may be implemented in a form of hardware, or may be implemented in a form of a software functional module. It should be noted that in embodiments of this application, division into the modules is an example and is merely logical function division, and may be other division in an actual implementation.

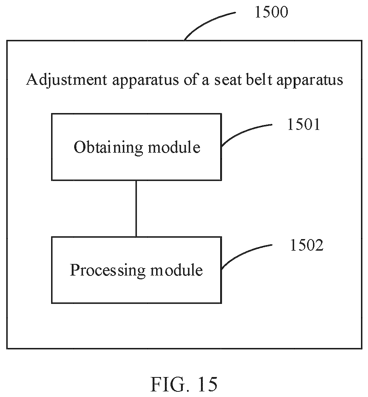

For example, FIG. 15 is a diagram of a structure of an adjustment apparatus of the seat belt apparatus according to an embodiment of this application. The adjustment apparatus of the seat belt apparatus may be implemented through the controller in the in-vehicle infotainment system, or may be implemented through the controller disposed in the seat belt inserting board. In this embodiment of this application, the adjustment apparatus of the seat belt apparatus is communicatively connected to the seat belt apparatus in the foregoing embodiments. As shown in FIG. 15, the adjustment apparatus 1500 of the seat belt apparatus includes:
an obtaining module 1501, configured to: when the seat belt inserting board is in snap fit with the seat belt buckle, obtain a pressure value detected by the pressure detection component and a status of the pressure adjustment component; and
a processing module 1502, configured to adjust a pressure value of the seat belt strap through the pressure adjustment component based on the pressure value.

In a possible implementation of this embodiment of this application, the processing module 1502 is specifically configured to:
determine, based on a position of the pressure detection component, a pressure threshold of a human body part in contact with the pressure detection component; and
when it is determined that the received pressure value is greater than the pressure threshold of the human body part in contact with the pressure detection component, adjust a pressure value at the position of the pressure detection component on the seat belt strap by controlling the status of the pressure adjustment component.

In a possible implementation of this embodiment of this application, the obtaining module 1501 is further configured to obtain a plurality of strap pressure values detected by a plurality of pressure detection components on the seat belt strap.

The processing module 1502 is further configured to: if the plurality of strap pressure values are greater than pressure thresholds of human body parts in contact with the corresponding pressure detection components, and a distribution rule of the plurality of strap pressure values is inconsistent with a pressure distribution rule of the seat belt apparatus being normally worn, determine that the seat belt apparatus is not correctly worn, and output alarm information.

In a possible implementation of this embodiment of this application, the apparatus is disposed in the seat belt inserting board.

The obtaining module 1501 is specifically configured to receive the pressure value from the pressure detection component and the status from the pressure adjustment component through a receiving module.

The processing module 1502 is further configured to: when the pressure value at the position of the pressure detection component on the seat belt strap is adjusted to an adjustment threshold of the pressure adjustment component, but the pressure value is still greater than the pressure threshold of the human body part in contact with the pressure detection component, send a guide adjustment request to the second controller through a sending module. The guide adjustment request is used to request to adjust a position at which the seat belt strap is connected to the guide plate adjustment apparatus, and the second controller is a controller disposed in the in-vehicle infotainment system of the vehicle.

In a possible implementation of this embodiment of this application, the apparatus is disposed in the in-vehicle infotainment system of the vehicle.

The obtaining module 1501 is specifically configured to: receive the pressure value from the pressure detection component and the status from the pressure adjustment component through a receiving module; or receive the pressure value of the pressure detection component and the status of the pressure adjustment component from the first controller, where the first controller is a controller disposed in the seat belt inserting board.

Optionally, the processing module 1502 is further configured to: when a first condition is met, adjust, based on the pressure value and the status of the pressure adjustment component, a position at which the seat belt strap is fastened to the guide plate adjustment apparatus.

In an example, the first condition is that the pressure value at the position of the pressure detection component on the seat belt strap is adjusted to the adjustment threshold of the pressure adjustment component, and the pressure value is greater than the pressure threshold of the human body part in contact with the pressure detection component.

In another example, the first condition is that the guide adjustment request is received, and the guide adjustment request is used to request to adjust the position at which the seat belt strap is connected to the guide plate adjustment apparatus.

In a possible implementation of this embodiment of this application, the processing module 1502 is further configured to: when an operation on a pressure adjustment control is detected, adjust a pressure value of a corresponding area on the seat belt strap, where the pressure adjustment control is displayed through the in-vehicle infotainment system of the vehicle.

In a possible implementation of this embodiment of this application, the processing module 1502 is further configured to: when an operation on a pressure setting control is detected, determine whether to memorize a current pressure status of the seat belt strap, and perform a corresponding operation, where the pressure setting component is displayed through the in-vehicle infotainment system of the vehicle.

The adjustment apparatus of the seat belt apparatus provided in this embodiment of this application may be configured to perform the technical solution of the adjustment method for a seat belt apparatus. For an implementation principle and effective effect of the adjustment apparatus, refer to the descriptions in the foregoing embodiments. Details are not described herein again.

An embodiment of this application further provides a controller, including a memory and a processor. The memory is configured to store a computer program, and the processor is configured to execute the computer program to perform the technical solution of the adjustment method for a seat belt apparatus.

In some implementations, the memory stores the following elements: an executable module or a data structure, or a subset thereof, or an extended set thereof.

The method described in the foregoing embodiment of this application may be applied to the processor, or may be implemented by the processor. The processor may be an integrated circuit chip and has a signal processing capability. In an implementation process, steps in the foregoing methods can be implemented by using a hardware integrated logical circuit in the processor, or by using instructions in a form of software. The processor may implement or perform the processing-related method, steps, and logical block diagrams that are disclosed in embodiments of this application.

The steps of the method disclosed with reference to embodiments of this application may be directly executed and accomplished by a hardware decoding processor, or may be executed and accomplished by using a combination of hardware and software modules in the decoding processor. The software module may be located in a mature storage medium in the art, for example, a random access memory, a read only memory, a programmable read-only memory, or an electrically erasable programmable read only memory (electrically erasable programmable read only memory, EEPROM) The storage medium is located in the memory, and a processor reads information in the memory and completes the steps in the foregoing methods in combination with hardware of the processor.

In the foregoing embodiments, the instructions that are stored in the memory and that are to be executed by the processor may be implemented in a form of computer program product. The computer program product may be written into the memory in advance, or may be downloaded and installed in the memory in a form of software.

An embodiment of this application further provides a computer-readable storage medium. The computer-readable storage medium stores a computer program or instructions. When the computer program or the instructions are run on a computer, the computer is enabled to perform the technical solution of the adjustment method for a seat belt apparatus.

All or some of the methods described in the foregoing embodiments may be implemented through software, hardware, firmware, or any combination thereof. If the methods are implemented through the software, a function may be stored on the computer-readable medium as one or more instructions or code or transmitted on the computer-readable medium. The computer-readable medium may include a computer storage medium and communication medium, and may also include any medium that can transfer a computer program from one place to another. The storage medium may be any target medium accessible by a computer.

In a possible implementation, the computer-readable medium may include a RAM, a ROM, a compact disc read-only memory (compact disc read-only memory, CD-ROM) or another optical disc memory, a magnetic disk memory or another magnetic storage device, or any other medium that is used to carry or store required program code in a form of instruction or data structure, and may be accessed by the computer. In addition, any connection is appropriately referred to as a computer-readable medium. For example, if a coaxial cable, an optical fiber cable, a twisted pair, a digital subscriber line (Digital Subscriber Line, DSL), or a wireless technology (like infrared, radio, and a microwave) is used to transmit software from a website, a server, or another remote source, the coaxial cable, the optical fiber cable, the twisted pair, the DSL, or the wireless technology such as infrared, radio, and a microwave is included in a definition of the medium. A disk and an optical disk as used herein include an optical disk, a laser disk, a digital versatile disc (Digital Versatile Disc, DVD), a floppy disk, and a blue-ray disc, where the disk generally reproduces data by magnetic means, while the optical disk optically reproduces data by using laser. The combination of the above shall also be included in the scope of the computer-readable medium.

An embodiment of this application further provides a computer program product including a computer program. When the computer program is run on a computer, the computer is enabled to perform the technical solution of the adjustment method for a seat belt apparatus.

Optionally, the computer program product includes one or more computer instructions. When the computer program instructions are loaded and executed on a computer, all or some of the procedures or functions according to embodiments of this application are generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be stored by a computer, or a data storage device such as a server or a data center integrated with one or more usable media. For example, the usable medium may include a magnetic medium (for example, a floppy disk, a hard disk, or a magnetic tape), an optical medium (for example, a digital versatile disc (digital versatile disc, DVD)), or a semiconductor medium (for example, a solid state disk (solid state disk, SSD)), and the like.

An embodiment of this application further provides a chip or a chip system. The chip or the chip system includes at least one processor and a communication interface. The communication interface and the at least one processor are interconnected through a line. The at least one processor is configured to run a computer program or instructions, to perform the method according to any one of the fourth aspect or the possible implementations of the fourth aspect. The communication interface in the chip may be an input/output interface, a pin, a circuit, or the like.

In a possible implementation, the chip or the chip system described above in this application further includes at least one memory, and the at least one memory stores instructions. The memory may be a storage unit inside the chip, for example, a register or a buffer, or may be a storage unit (for example, a read-only memory or a random access memory) of the chip.

Embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processing unit of another programmable image processing device to generate a machine, so that the instructions executed by the computer or the processing unit of the another programmable image processing device generate an apparatus for implementing a specific function in one or more procedures in the flowcharts and/or in one or more blocks in the block diagrams.

In the foregoing specific implementations, the objectives, technical solutions, and beneficial effect of this application are further described in detail. It should be understood that the foregoing descriptions are merely the specific implementations of this application, but are not intended to limit the protection scope of this application. Any modification, equivalent replacement, improvement, or the like made based on the technical solutions of this application shall fall within the protection scope of this application.

## Claims

1. A seat belt apparatus, comprising: a seat belt strap, a seat belt inserting board that penetrates the seat belt strap, and a seat belt buckle that is in snap fit with the seat belt inserting board, wherein
the seat belt strap comprises a seat belt body, and a pressure detection component and a pressure adjustment component that are disposed on the seat belt body; and
when the seat belt inserting board is in snap fit with the seat belt buckle, the pressure detection component is configured to detect a pressure value of the seat belt strap, and the pressure adjustment component is configured to adjust the pressure value of the seat belt strap.

2. The seat belt apparatus according to claim 1, wherein a plurality of pressure detection components and a plurality of pressure adjustment components are disposed on the seat belt strap by area;
an area distribution rule of the plurality of pressure detection components and an area distribution rule of the plurality of pressure adjustment components are related to human body parts in contact with the seat belt apparatus being worn; and
a distribution density of the plurality of pressure detection components and a distribution density of the plurality of pressure adjustment components are positively correlated with sensitivity of the human body parts to pressure.

3. The seat belt apparatus according to claim 1 or 2, wherein the pressure detection component is further configured to send the pressure value to a first controller; and
the pressure adjustment component is further configured to: receive an adjustment instruction from the first controller, and adjust the pressure value of the seat belt strap based on the adjustment instruction, wherein the adjustment instruction is determined by the first controller based on the received pressure value.

4. The seat belt apparatus according to claim 3, wherein the first controller is disposed in an in-vehicle infotainment system of a vehicle to which the seat belt apparatus belongs.

5. The seat belt apparatus according to claim 3, wherein the first controller is disposed in the seat belt inserting board.

6. The seat belt apparatus according to claim 5, wherein the first controller is electrically connected to both the pressure detection component and the pressure adjustment component; and
the first controller is configured to adjust the pressure value of the seat belt strap through the pressure adjustment component based on the pressure value received from the pressure detection component and a position of the pressure detection component.

7. The seat belt apparatus according to claim 6, wherein the first controller is specifically configured to:
determine, based on the position of the pressure detection component, a pressure threshold of a human body part in contact with the pressure detection component; and
when it is determined that the received pressure value is greater than the pressure threshold of the human body part in contact with the pressure detection component, adjust a pressure value at the position of the pressure detection component on the seat belt strap by controlling a status of the pressure adjustment component.

8. The seat belt apparatus according to claim 7, wherein the first controller is further configured to:
when the seat belt inserting board is in snap fit with the seat belt buckle, send, to a second controller, the pressure value obtained from the pressure detection component and the status of the pressure adjustment component, wherein the second controller is disposed in an in-vehicle infotainment system of a vehicle to which the seat belt apparatus belongs.

9. The seat belt apparatus according to claim 8, wherein the first controller is further configured to:
when the pressure value at the position of the pressure detection component on the seat belt strap is adjusted to an adjustment threshold of the pressure adjustment component, but the pressure value is still greater than the pressure threshold of the human body part in contact with the pressure detection component, send a guide adjustment request to the second controller, wherein the guide adjustment request is used to request to adjust a position at which the seat belt strap is connected to a guide plate adjustment apparatus.

10. The seat belt apparatus according to any one of claims 5 to 9, wherein the first controller is further configured to:
obtain a plurality of strap pressure values detected by the plurality of pressure detection components on the seat belt strap; and
if the plurality of strap pressure values are greater than pressure thresholds of human body parts in contact with the corresponding pressure detection components, and a distribution rule of the plurality of strap pressure values is inconsistent with a pressure distribution rule of the seat belt apparatus being normally worn, determine that the seat belt apparatus is not correctly worn, and output alarm information.

11. The seat belt apparatus according to any one of claims 1 to 10, wherein the pressure detection component is disposed on a first surface of the seat belt body, and the first surface is a surface that is in contact with a user body when the seat belt apparatus is worn;
the pressure adjustment component comprises an inflation component disposed on a second surface of the seat belt body and an airbag disposed between the seat belt body and the pressure detection component; and
the seat belt body is further provided with an air hole that communicates the inflation component with the airbag, and the air hole is used by the inflation component to inflate and deflate the airbag.

12. The seat belt apparatus according to claim 11, wherein a first line is disposed on the seat belt body, and the first line is configured to electrically connect the inflation component and a power supply component that is disposed in the seat belt inserting board.

13. The seat belt apparatus according to claim 11 or 12, wherein the seat belt strap further comprises an airbag wrapping layer, the pressure detection component is disposed on the airbag wrapping layer, and the airbag is disposed between the seat belt body and the airbag wrapping layer.

14. The seat belt apparatus according to claim 13, wherein when the first controller is disposed in the seat belt inserting board, a second line connecting the pressure detection component and the first controller is further disposed on the airbag wrapping layer; and
the pressure detection component is configured to transmit the detected pressure value to the first controller through the second line.

15. The seat belt apparatus according to any one of claims 1 to 14, wherein a first snap-fit part is disposed at an end part of the seat belt inserting board, an electrical connection component is disposed on the first snap-fit part, and the seat belt buckle comprises a second snap-fit part matching the first snap-fit part; and
when the first snap-fit part is in snap fit with the second snap-fit part, the electrical connection component is configured to electrically connect the seat belt inserting board and the seat belt buckle.

16. A vehicle seat, comprising the seat belt apparatus according to any one of claims 1 to 15.

17. The vehicle seat according to claim 16, further comprising a first fastening part, wherein
the first fastening part is located on a first side of a seat cushion of the vehicle seat, the first fastening part is configured to fasten a first end of the seat belt strap comprised in the seat belt apparatus, a second end of the seat belt strap is connected to a guide plate adjustment apparatus of a vehicle pillar, and the first side is a side close to the vehicle pillar.

18. The vehicle seat according to claim 16 or 17, further comprising a second fastening part, wherein
the second fastening part is located on a second side of the seat cushion of the vehicle seat, the second fastening part is configured to fasten the seat belt buckle of the seat belt apparatus, and the second side is a side away from the vehicle pillar.

19. A vehicle, comprising the seat belt apparatus according to any one of claims 1 to 15.

20. The vehicle according to claim 19, further comprising a guide plate adjustment apparatus, a first fastening part, and a second fastening part, wherein
the guide plate adjustment apparatus is disposed at a first position of a vehicle pillar, the first fastening part is disposed at a second position of the vehicle pillar, the second fastening part is connected to a seat cushion, the first position is higher than a seat back, and the second position is lower than or flush with the seat cushion; and
the guide plate adjustment apparatus is configured to fasten a first end of the seat belt strap comprised in the seat belt apparatus, the first fastening part is configured to fasten a second end of the seat belt strap comprised in the seat belt apparatus, and the second fastening part is configured to fasten the seat belt buckle of the seat belt apparatus.

21. The vehicle according to claim 20, further comprising the second controller disposed in the in-vehicle infotainment system, wherein
the second controller is configured to: receive a pressure value detected by the pressure detection component and a status of the pressure adjustment component, and adjust a pressure value of the seat belt strap based on the pressure value and the status of the pressure adjustment component.

22. The vehicle according to claim 21, wherein the second controller is further configured to: when a first condition is met, adjust a position at which the seat belt strap is fastened to the guide plate adjustment apparatus.

23. The vehicle according to claim 22, wherein the first condition is that a pressure value at a position of the pressure detection component on the seat belt strap is adjusted to an adjustment threshold of the pressure adjustment component, and the pressure value is greater than a pressure threshold of a human body part in contact with the pressure detection component.

24. The vehicle according to claim 22, wherein the first condition is that a guide adjustment request is received, and the guide adjustment request is used to request to adjust the position at which the seat belt strap is connected to the guide plate adjustment apparatus.

25. The vehicle according to any one of claims 21 to 24, wherein the in-vehicle infotainment system is further configured to display a pressure adjustment control of at least one area on the seat belt strap; and
the second controller is further configured to adjust a pressure value of a corresponding area on the seat belt strap when an operation on the pressure adjustment control is detected.

26. The vehicle according to claim 25, wherein the in-vehicle infotainment system is further configured to display a pressure setting control for the seat belt strap; and
the second controller is further configured to: when an operation on the pressure setting control is detected, determine whether to memorize a current pressure status of the seat belt strap, and perform a corresponding operation.

27. An adjustment method for a seat belt apparatus, wherein the method is applied to a controller in a vehicle, the controller is communicatively connected to the seat belt apparatus according to any one of claims 1 to 15, and the method comprises:
when the seat belt inserting board is in snap fit with the seat belt buckle, obtaining a pressure value detected by the pressure detection component and a status of the pressure adjustment component; and
adjusting a pressure value of the seat belt strap through the pressure adjustment component based on the pressure value.

28. The method according to claim 27, wherein the adjusting a pressure value of the seat belt strap through the pressure adjustment component based on the pressure value comprises:
determining, based on a position of the pressure detection component, a pressure threshold of a human body part in contact with the pressure detection component; and
when it is determined that the received pressure value is greater than the pressure threshold of the human body part in contact with the pressure detection component, adjusting a pressure value at the position of the pressure detection component on the seat belt strap by controlling the status of the pressure adjustment component.

29. The method according to claim 27 or 28, further comprising:
obtaining a plurality of strap pressure values detected by the plurality of pressure detection components on the seat belt strap; and
if the plurality of strap pressure values are greater than pressure thresholds of human body parts in contact with the corresponding pressure detection components, and a distribution rule of the plurality of strap pressure values is inconsistent with a pressure distribution rule of the seat belt apparatus being normally worn, determining that the seat belt apparatus is not correctly worn, and outputting alarm information.

30. The method according to any one of claims 27 to 29, wherein the controller is disposed in the seat belt inserting board, and the obtaining a pressure value detected by the pressure detection component and a status of the pressure adjustment component comprises:
receiving the pressure value from the pressure detection component and the status from the pressure adjustment component; and
the method further comprises:
when the pressure value at the position of the pressure detection component on the seat belt strap is adjusted to an adjustment threshold of the pressure adjustment component, but the pressure value is still greater than the pressure threshold of the human body part in contact with the pressure detection component, sending a guide adjustment request to the second controller, wherein the guide adjustment request is used to request to adjust a position at which the seat belt strap is connected to the guide plate adjustment apparatus, and the second controller is a controller disposed in an in-vehicle infotainment system of the vehicle.

31. The method according to any one of claims 27 to 29, wherein the controller is disposed in an in-vehicle infotainment system of the vehicle, and the obtaining a pressure value detected by the pressure detection component and a status of the pressure adjustment component comprises:
receiving the pressure value from the pressure detection component and the status from the pressure adjustment component; or
receiving the pressure value of the pressure detection component and the status of the pressure adjustment component from the first controller, wherein the first controller is a controller disposed in the seat belt inserting board.

32. The method according to claim 31, wherein the method further comprises:
when a first condition is met, adjusting, based on the pressure value and the status of the pressure adjustment component, a position at which the seat belt strap is fastened to the guide plate adjustment apparatus.

33. The method according to claim 32, wherein the first condition is that the pressure value at the position of the pressure detection component on the seat belt strap is adjusted to an adjustment threshold of the pressure adjustment component, and the pressure value is greater than the pressure threshold of the human body part in contact with the pressure detection component.

34. The method according to claim 32, wherein the first condition is that a guide adjustment request is received, and the guide adjustment request is used to request to adjust the position at which the seat belt strap is connected to the guide plate adjustment apparatus.

35. The method according to any one of claims 27 to 34, wherein the method further comprises:
when an operation on a pressure adjustment control is detected, adjusting a pressure value of a corresponding area on the seat belt strap, wherein the pressure adjustment control is displayed through the in-vehicle infotainment system of the vehicle.

36. The method according to any one of claims 27 to 35, wherein the method further comprises:
when an operation on a pressure setting control is detected, determining whether to memorize a current pressure status of the seat belt strap, and performing a corresponding operation, wherein the pressure setting component is displayed through the in-vehicle infotainment system of the vehicle.
